# EUROPÄISCHE PATENTSCHRIFT

(11) **EP 3 805 965 B1**
(45) Veröffentlichungstag und Bekanntmachung des Hinweises auf die Patenterteilung: **14.06.2023**
(21) Anmeldenummer: 19201986.7
(22) Anmeldetag: 08.10.2019
(51) Int. Cl.: G06F 21/50, G06F 21/57

(54) **VERFAHREN ZUM VALIDIEREN VON VERTRAUENSWÜRDIGEN DATEN IN EINEM COMPUTERSYSTEM**
METHOD FOR VALIDATING TRUSTED DATA IN A COMPUTER SYSTEM
PROCÉDÉ DE VALIDATION DE DONNÉES DE CONFIANCE DANS UN SYSTÈME INFORMATIQUE

(43) Veröffentlichungstag der Anmeldung: 14.04.2021
(73) Patentinhaber: Camelot ITLAB GmbH, 68165 Mannheim (DE)
(72) Erfinder: Göbel, Andreas, 76694 Forst (DE); Joswig, Steffen, 69514 Laudenbach (DE); Packowski, Josef, 69121 Heidelberg (DE)
(74) Vertreter: 2s-ip Schramm Schneider Bertagnoll Patent- und Rechtsanwälte Part mbB

(56) Entgegenhaltungen:
- WO-A1-2019/185710
- DE-T2- 60 012 041
- US-A1- 2010 251 242
- US-A1- 2019 012 666

## Beschreibung

### Gebiet der Erfindung

Computer-implementiertes Verfahren zum Validieren von vertrauenswürdigen Daten in einem Computersystem.

### Hintergrund der Erfindung

Um vertrauenswürdige Daten mit einem Computer-implementierten Verfahren validieren zu können, ist es notwendig, dass dem Computerprogramm, das die Validierung durchführt, die vertrauenswürdigen Daten zur Verfügung gestellt werden. Validieren bedeutet, dass für die Daten geprüft wird, ob diese bestimmte Eigenschaften aufweisen. Dabei kann es vorkommen, dass die vertrauenswürdigen Daten, beispielsweise aufgrund einer Manipulation des Computerprogramms oder der Umgebung, in der das Computerprogramm ausgeführt wird, missbräuchlich nichtberechtigten Personen zugänglich gemacht werden. Die Dokumente US2019/012666 und WO2019/185710 sind Teil des technischen Hintergrundes

### Aufgabe der Erfindung

Aufgabe der vorliegenden Erfindung ist es daher, eine Lösung bereitzustellen, die ein sicheres Validieren von vertrauenswürdigen Daten gewährleistet.

### Erfindungsgemäße Lösung

Bereit gestellt wird demnach ein Computer-implementiertes Verfahren zum Validieren von vertrauenswürdigen Daten in einem Computersystem, das
- ein verteiltes Repository-Netzwerk,
- ein mit dem Repository-Netzwerk operativ gekoppeltes oder operativ koppelbares erstes Clientsystem, und
- zumindest ein mit diesem Repository-Netzwerk operativ gekoppeltes oder operativ koppelbares erstes Serversystem umfasst,
wobei die vertrauenswürdigen Daten Datensätze umfassen, die in einer Speichereinrichtung des ersten Serversystems gespeichert werden, wobei
- an dem ersten Clientsystem eine erste Validierungs-Anfragenachricht erzeugt wird, die in dem Repository-Netzwerk gespeichert wird und an das erste Serversystem übertragen wird, wobei die erste Validierungs-Anfragenachricht Informationen darüber umfasst, welche Daten (die in der Speichereinrichtung des ersten Serversystems gespeichert sind) von dem ersten Serversystem zu validieren sind,
- das erste Serversystem die erste Validierungs-Anfragenachricht empfängt und zur Beantwortung an eine vertrauenswürdige Softwarekomponente übergibt, die in einer vertrauenswürdigen und gesicherten Umgebung des ersten Serversystems ausgeführt wird, wobei die vertrauenswürdige Softwarekomponente
   - basierend auf der ersten Validierungs-Anfragenachricht eine Anzahl von Datensätzen aus der Speichereinrichtung des ersten Serversystems ausliest,
   - für zumindest einen ausgelesenen Datensatz (der auch Bestandteil eines Aggregats von ausgelesenen Datensätzen sein kann) überprüft, ob dieser vorbestimmte Bedingungen erfüllt, und
   - eine erste Validierungs-Antwortnachricht erzeugt, die Informationen darüber umfasst, welche der ausgelesenen Datensätze die vorbestimmte Bedingung erfüllen, und
- die erste Validierungs-Antwortnachricht in dem Repository-Netzwerk gespeichert wird und an das erste Clientsystem übertragen wird,
wobei das Computersystem ferner ein mit dem Repository-Netzwerk operativ gekoppeltes oder operativ koppelbares zweites Clientsystem umfasst, wobei nicht-vertrauenswürdige Daten von dem zweiten Clientsystem an das Repository-Netzwerk übertragen werden und in dem Repository-Netzwerk gespeichert werden, dadurch gekennzeichnet, dass das erste Clientsystem das Repository-Netzwerk überwacht und bei einer Änderung der im Repository-Netzwerk gespeicherten nicht-vertrauenswürdigen Daten die erste Validierungs-Anfragenachricht erzeugt.

Das erfindungsgemäße Verfahren hat den Vorteil, dass vertrauenswürdige Daten validiert werden können, ohne dass die vertrauenswürdigen Daten selbst preisgegeben werden müssen. Durch das Ausführen der vertrauenswürdigen Softwarekomponente in einer vertrauenswürdigen und gesicherten Umgebung ist zudem gewährleistet, dass die Softwarekomponente nicht manipuliert werden kann. Eine Manipulation der Softwarekomponente kann erkannt werden, sodass das Ausführen der manipulierten Softwarekomponente durch die vertrauenswürdige und gesicherte Umgebung verhindert werden bzw. unterbunden werden kann.

Vorteilhaft ist es, wenn die vertrauenswürdige Softwarekomponente beim Überprüfen, ob ein ausgelesener Datensatz die vorbestimmten Bedingungen erfüllt, einen Abgleich des ausgelesenen Datensatzes mit den im Repository-Netzwerk gespeicherten nicht-vertrauenswürdigen Daten durchführt, wobei ermittelt wird, ob zu dem ausgelesenen Datensatz korrespondierende Daten in dem Repository-Netzwerk gespeichert sind, wobei die vorbestimmten Bedingungen erfüllt sind, wenn zu dem ausgelesenen Datensatz korrespondierende Daten in dem Repository-Netzwerk gespeichert sind.

Vorteilhaft ist es, wenn die erste Validierungs-Anfragenachricht und/oder die erste Validierungs-Antwortnachricht verschlüsselt in dem Repository-Netzwerk gespeichert werden.

In einer Ausgestaltung der Erfindung kann das erste Serversystem seinerseits mit einem zweiten Serversystem gekoppelt sein oder koppelbar sein, wobei das erste Serversystem
- basierend auf der ersten Validierungs-Anfragenachricht und/oder basierend auf den ausgelesenen Datensätzen eine zweite Validierungs-Anfragenachricht erstellt, die in dem Repository-Netzwerk gespeichert wird und an das zweite Serversystem übertragen wird, und
- von dem zweiten Serversystem eine zweite Validierungs-Antwortnachricht empfängt,

wobei das erste Serversystem die empfange zweite Validierungs-Antwortnachricht als Bestandteil der ersten Validierungs-Antwortnachricht an das erste Clientsystem überträgt, und
wobei eine vertrauenswürdige Softwarekomponente, die in einer vertrauenswürdigen und gesicherten Umgebung des zweiten Serversystems ausgeführt wird,
   - basierend auf der zweiten Validierungs-Anfragenachricht eine Anzahl von Datensätzen aus einer Speichereinrichtung des zweiten Serversystems ausliest,
   - für zumindest einen ausgelesenen Datensatz überprüft, ob dieser vorbestimmte Bedingungen erfüllt, und
   - die zweite Validierungs-Antwortnachricht erzeugt, die Informationen darüber umfasst, welche der ausgelesenen Datensätze die vorbestimmte Bedingung erfüllen.

Die vertrauenswürdige Softwarekomponente des zweiten Serversystems kann beim Überprüfen, ob ein ausgelesener Datensatz die vorbestimmten Bedingungen erfüllt, einen Abgleich des ausgelesenen Datensatzes mit in dem Repository-Netzwerk gespeicherten nicht-vertrauenswürdigen Daten durchführen, wobei ermittelt wird, ob zu dem ausgelesenen Datensatz korrespondierende Daten in dem Repository-Netzwerk gespeichert sind, wobei die vorbestimmten Bedingungen erfüllt sind, wenn zu dem ausgelesenen Datensatz korrespondierende Daten in dem Repository-Netzwerk gespeichert sind.

Die zweite Validierungs-Anfragenachricht und/oder die zweite Validierungs-Antwortnachricht kann verschlüsselt in dem Repository-Netzwerk gespeichert werden.

Das erste Serversystem kann die vertrauenswürdige Softwarekomponente digital signieren und die digitale Signatur in dem Repository-Netzwerk speichern.

Das zweite Serversystem kann die vertrauenswürdige Softwarekomponente digital signieren und wobei die digitale Signatur in dem Repository-Netzwerk speichern.

Die erste Validierungs-Antwortnachricht kann von dem ersten Serversystem digital signiert werden, wobei in dem Repository-Netzwerk die Signatur der ersten Validierungs-Antwortnachricht mit einem öffentlichen Schlüssel des ersten Serversystems, der in dem in dem Repository-Netzwerk gespeichert wird, validiert wird, wobei bei einer positiven Validierung die Validierungs-Antwortnachricht an das erste Clientsystem übertragen wird.

Die zweite Validierungs-Antwortnachricht kann von dem zweiten Serversystem digital signiert werden, wobei in dem Repository-Netzwerk die Signatur der zweiten Validierungs-Antwortnachricht mit einem öffentlichen Schlüssel des zweiten Serversystems, der in dem in dem Repository-Netzwerk gespeichert wird, validiert wird, wobei bei einer positiven Validierung die zweite Validierungs-Antwortnachricht an das erste Serversystem übertragen wird.

Das Überprüfen, ob ein ausgelesener Datensatz die vorbestimmten Bedingungen erfüllt, kann anhand einer vorbestimmten Validierungslogik durchgeführt werden, wobei Informationen zu der vorbestimmten Validierungslogik in dem Repository-Netzwerk gespeichert werden.

Das verteilte Repository-Netzwerk kann ein Blockchain-Netzwerk sein.

### Kurzbeschreibung der Figuren

Einzelheiten und Merkmale der Erfindung ergeben sich aus der nachfolgenden Beschreibung in Verbindung mit der Zeichnung. Es zeigt:
- Fig. 1: ein Blockdiagramm eines Computersystems zum sicheren Ausführen eines Workflows,
- Fig. 2: ein Blockdiagramm, anhand dessen das Verfahren zum sicheren Ausführen eines Workflows näher beschrieben wird;
- Fig. 3 und 4: ein Beispiel eines Workflow-Modells;
- Fig. 5: einen exemplarischen Ablauf für das Erzeugen eines Trustlets;
- Fig. 6: ein Blockdiagramm, anhand dessen das Verfahren zum sicheren Validieren von vertrauenswürdigen Daten näher beschrieben wird; und
- Fig. 7: ein Ablaufdiagramm zur Beschreibung eines konkreten Beispiels des Verfahrens zum sicheren Validieren von vertrauenswürdigen Daten.

### Detaillierte Beschreibung der Erfindung

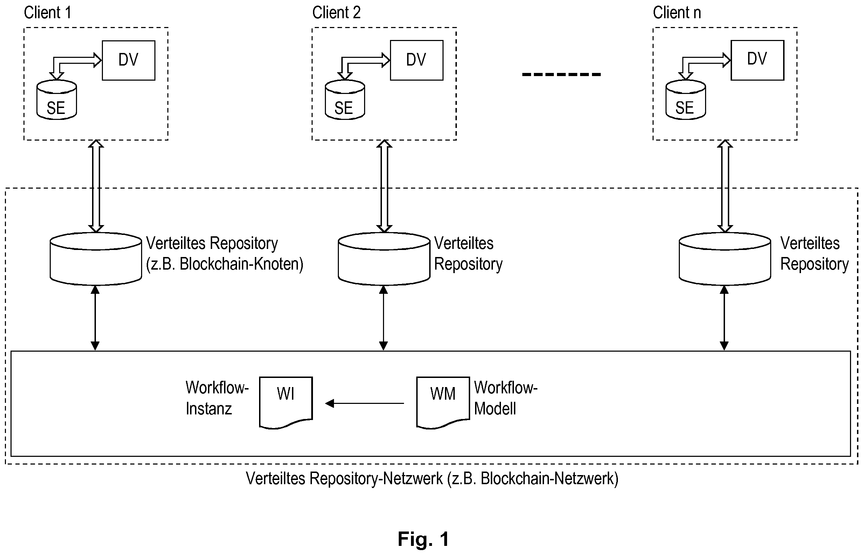

**Fig. 1** zeigt ein Blockdiagramm eines Computersystems zum sicheren Ausführen eines Workflows. Das Computersystem umfasst ein verteiltes Repository-Netzwerk, das vorzugsweise als Blockchain-Netzwerk, bestehend aus mehreren verteilten Blockchain-Knoten, ausgestaltet ist. Ferner umfasst das Computersystem eine Anzahl von Clientsystemen (Client 1, Client 2, ..., Client n), die operativ mit dem verteilten Repository-Netzwerk gekoppelt sind bzw. koppelbar sind. Vorzugsweise umfassen die Clientsysteme jeweils ein Datenverarbeitungssystem DV, die ihrerseits jeweils zumindest eine Speichereinrichtung SE (lokale Speichereinrichtung) umfassen.

Die Blockchain-Knoten können jeweils den einzelnen Clientsystemen zugeordnet sein, d.h., die Daten dieser Blockchain-Knoten können jeweils in einer Speichereinrichtung der Clientsysteme gespeichert sein. Alternativ können die Blockchain-Knoten aber auch entfernt von den jeweiligen Clientsystemen gehalten werden, wobei die Clientsysteme über ein Kommunikationsnetzwerk (etwa das Internet) auf die Blockchain-Knoten zugreifen können.

An einem der Clientsysteme wird ein Modell eines Workflows (nachfolgend auch Workflow-Modell genannt) erzeugt und in dem verteilten Repository-Netzwerk gespeichert. Das Workflow-Modell steht dann zur Ausführung durch die Clientsysteme zur Verfügung.

Zum Ausführen des durch das Workflow-Modell definierten Workflows wird in dem Computersystem aus dem Workflow-Modell eine Workflow-Instanz erzeugt. Diese Workflow-Instanz wird dann wiederum in dem verteilten Repository-Netzwerk gespeichert. Ausführungsbedingungen und der genaue Ablauf beim Ausführen eines Workflows bzw. einer Workflow-Instanz werden weiter unten näher beschrieben.

Beim Ausführen eines Workflows, d.h. einer Workflow-Instanz können Daten erzeugt werden, die wiederum in dem verteilten Repository-Netzwerk gespeichert werden können. Alternativ oder zusätzlich können die beim Ausführen einer Workflow-Instanz erzeugten Daten auch in den lokalen Speichereinrichtungen SE der Clientsysteme gespeichert werden.

Ferner können zum Ausführen einer Workflow-Instanz auch Daten zur Verfügung gestellt werden, die ebenfalls in dem verteilten Repository-Netzwerk und/oder in den lokalen Speichereinrichtungen SE der Clientsysteme gespeichert sein können.

Auf den Clientsystemen, die an der Ausführung einer Workflow-Instanz beteiligt sind, werden sogenannte Workflow-Applikationen ausgeführt. Für jeden auszuführenden Workflow-Schritt wird von der Workflow-Applikation ein vorbestimmter Programmcode zur Ausführung gebracht. Bei dem Programmcode kann es sich um einen sogenannten Chaincode oder Smart Contract handeln.

Der Programmcode für einen Workflow-Schritt kann in dem jeweiligen Clientsystem, etwa als Bestandteil der jeweiligen Workflow-Applikation gespeichert sein. Alternativ kann der Programmcode auch in dem verteilten Repository-Netzwerk gespeichert werden und zur Ausführung an das jeweilige Clientsystem bzw. an die jeweilige Workflow-Applikation übertragen werden. In einer Ausgestaltung der Erfindung kann der Programmcode auch auf einem Blockchain-Knoten zur Ausführung gebracht werden.

Ein Workflow-Schritt kann mehrere Aktionen umfassen. In diesem Fall kann der Programmcode des Workflow-Schrittes mehrere Programmcode-Abschnitte umfassen, wobei jeder Aktion des Workflow-Schrittes ein Programmcode-Abschnitt zugeordnet ist.

Eine Workflow-Instanz kann mehrere Workflow-Schritte umfassen, wobei jeder Workflow-Schritt auf einem anderen Clientsystem bzw. von einer anderen Workflow-Applikation ausgeführt werden kann.

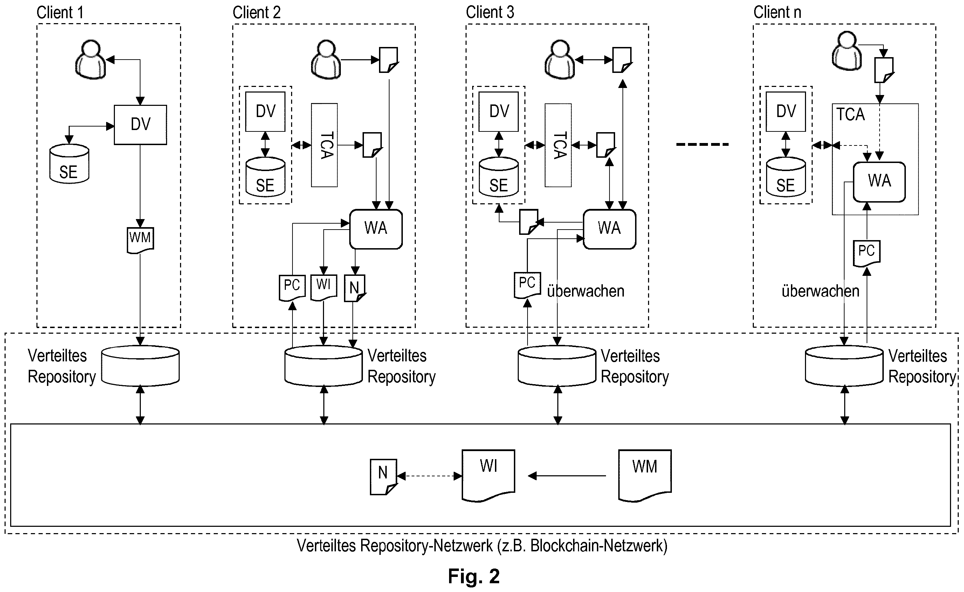

**Fig. 2** zeigt ein Blockdiagramm, anhand dessen das Verfahren zum sicheren Ausführen eines Workflows näher beschrieben wird.

Bei dem in Fig. 2 gezeigten Beispiel sind vier Personen an der Modellierung bzw. an der Ausführung eines Workflows beteiligt, wobei jede Person einem Clientsystem zugeordnet ist.

Das gesamte Verfahren lässt sich prinzipiell in 3 Hauptschritte unterteilen:
- Hauptschritt 1: Erzeugen des Workflow-Modells;
- Hauptschritt 2: Erzeugen einer Workflow-Instanz, d.h. Starten eines Workflows basierend auf einem Workflow-Modell; und
- Hauptschritt 3: Ausführen der Workflow-Instanz.

### Hauptschritt 1: Erzeugen des Workflow-Modells

Der Hauptschritt 1, d.h. das Erzeugen eines Workflow-Modells, wird bei dem in Fig. 2 gezeigten Beispiel an dem ersten Clientsystem (Client 1) ausgeführt. Hierzu kann auf der Datenverarbeitungseinrichtung DV des ersten Clientsystems eine Software zur Modellierung von Workflows ausgeführt werden, mit der das gewünschte Workflow-Modell erstellt werden kann.

Ein Prozess, der mit einem Workflow-Modell beschrieben wird, besteht in der Regel aus mehreren Prozessschritten, wobei an dem Prozess mehrere Teilnehmer beteiligt sein können.

Ein Workflow-Modell beschreibt eine Anzahl von Workflow-Schritten, wobei ein Prozessschritt in dem Workflow-Modell durch mehrere Workflow-Schritte repräsentiert werden kann. Im einfachsten Fall wird ein Prozessschritt durch einen Workflow-Schritt repräsentiert. Zudem beschreibt ein Workflow-Modell Interaktionen mit Benutzern (Teilnehmer, die an dem Prozess beteiligt sind) und welche Daten für die Ausführung des Workflows benötigt werden und welche Daten beim Ausführen des Workflows erzeugt werden.

Das erzeugte Workflow-Modell wird in dem verteilten Repository-Netzwerk, vorzugsweise ein Blockchain-Netzwerk, gespeichert.

Erfindungsgemäß wird in dem Workflow-Modell für jeden Workflow-Schritt zumindest Folgendes gespeichert bzw. definiert:
- Ausführungsbedingungen, die zum Ausführen des jeweiligen Workflow-Schritts in dem Computersystem erfüllt sein müssen. Das können beispielsweise Berechtigungen sein, über die ein Benutzer verfügen muss, um den Workflow-Schritt auszuführen. Eine weitere Ausführungsbedingung könnte beispielsweise definieren, welche vorhergehenden Workflow-Schritte erfolgreich abgeschlossen sein müssen, um den Workflow-Schritt ausführen zu können. Eine noch weitere Ausführungsbedingung könnte beispielsweise definieren, welche Daten in dem verteilten Repository-Netzwerk und/oder in der lokalen Speichereinrichtungen des Clientsystems, auf dem der Workflow-Schritt ausgeführt werden soll, vorhanden sein müssen, um den Workflow-Schritt ausführen zu können.

Die Ausführungsbedingungen für die Ausführung des Workflows bzw. der Workflow-Instanz an sich sind durch die Ausführungsbedingungen des Initialschrittes (Workflow-Schritt, der als erster Schritt beim Starten der Workflow-Instanz ausgeführt wird) der Workflow-Instanz festgelegt.
- Ereignisse, die beim Ausführen des Workflow-Schrittes in dem Computersystem aufgezeichnet werden. Ereignisse können beispielsweise eine Änderung des Status der ausgeführten Workflow-Instanz oder das Erzeugen von Daten durch die Workflow-Instanz sein. Vorteilhaft ist es, wenn die beim Ausführen der Workflow-Instanz erzeugten Ereignisse in dem verteilten Repository-Netzwerk gespeichert werden. Die in dem verteilten Repository-Netzwerk gespeicherten Ereignisse können dann als unveränderlicher Audit-Trail für die jeweilige Workflow-Instanz verwendet werden.
- Aufgaben, die einem Benutzer, einer Benutzerrolle oder einem Clientsystem zugeordnet werden, wenn ein Workflow-Schritt in dem Computersystem ausgeführt wird. Sobald eine Aufgabe beim Ausführen einer Workflow-Instanz ausgeführt wurde, wird der nächste Workflow-Schritt oder, sofern vorhanden, die nächste Aktion innerhalb des Workflow-Schrittes angestoßen.
   a) Eine Aufgabe kann einen auszuführenden Workflow-Schritt umfassen.
   b) Alternativ kann eine Aufgabe eine Aktion umfassen, die von einem Benutzer außerhalb des Computersystems ausgeführt werden muss und dessen Ausführung in dem Computersystem bestätigt werden muss. Die Bestätigung kann digital signiert und in dem verteilten Repository-Netzwerk gespeichert werden.
   c) In einer noch weiteren Alternative kann eine Aufgabe eine Aktion umfassen, die beispielsweise (ohne Benutzerinteraktion) von einem Clientsystem ausgeführt werden muss. Beispielsweise kann eine Aufgabe darin bestehen, dass das Clientsystem eine Funktion in einem externen Computersystem ausführt. Nach erfolgreicher Ausführung kann das Clientsystem die Ausführung bestätigen, wobei die Bestätigung vorzugsweise digital signiert und in dem verteilten Repository-Netzwerk gespeichert wird.
- Benachrichtigungen, die einem Benutzer, einer Benutzerrolle oder einem Clientsystem zur Verfügung gestellt werden, wenn ein Workflow-Schritt in dem Computersystem erfolgreich ausgeführt wurde oder wenn ein Workflow-Schritt in dem Computersystem ausgeführt werden muss. Beim Ausführen einer Workflow-Instanz werden die Benachrichtigungen im verteilten Repository-Netzwerk gespeichert.

Vorteilhaft ist es, wenn die Benachrichtigungen verschlüsselt in dem verteilten Repository-Netzwerk gespeichert werden, vorteilhafter Weise mit dem öffentlichen Schlüssel der Instanz (Benutzer, Benutzerrolle oder Clientsystem), für die die Benachrichtigungen bestimmt ist. Die hierfür benötigten öffentlichen Schlüssel können ebenfalls in dem verteilten Repository-Netzwerk gespeichert werden.

Die auf den Clientsystemen ausgeführten Workflow-Applikationen können das verteilte Repository-Netzwerk hinsichtlich neuer Benachrichtigungen überwachen. So kann beispielsweise nach einem erfolgreichen Ausführen eines Workflow-Schrittes einer Workflow-Instanz auf einem ersten Clientsystem eine Benachrichtigung für ein zweites Clientsystem erzeugt und in dem verteilten Repository-Netzwerk gespeichert werden. Mit dieser Benachrichtigung kann das zweite Clientsystem beispielsweise darüber informiert werden, dass der nächste Workflow-Schritt nunmehr ausgeführt werden kann. Sobald das zweite Clientsystem diese Benachrichtigung "erkennt", kann es den nächsten Workflow-Schritt ausführen.

Anstelle des Überwachens des verteilten Repository-Netzwerkes hinsichtlich neuere Benachrichtigungen, können die erzeugten Benachrichtigungen von dem verteilten Repository-Netzwerk auch direkt an die entsprechenden Empfänger gesendet werden, beispielsweise als E-Mail. Die Benachrichtigungen können auch in diesem Fall in dem verteilten Repository-Netzwerk gespeichert werden.

Ferner können in dem Workflow-Modell für jeden Workflow-Schritt Informationen zu einer Anzahl von Aktionen definiert und gespeichert werden, die bei der Ausführung des Workflow-Schrittes einer Workflow-Instanz ausgeführt werden können.

In einer weiteren Ausgestaltung der Erfindung kann es vorgesehen sein, sogenannte Rollback-Informationen oder Rollback-Aktionen in dem Workflow-Modell zu hinterlegen, mit denen bei der Ausführung einer Workflow-Instanz bereits ausgeführte Aktionen und/oder Workflow-Schritte rückgängig gemacht werden können.

In einer Ausgestaltung der Erfindung ist es vorgesehen, dass die Software zur Modellierung von Workflows und/oder das verteilte Repository-Netzwerk ein erzeugtes Workflow-Modell validieren, sodass das Erzeugen einer Workflow-Instanz erst dann möglich ist, wenn das Workflow-Modell erfolgreich validiert wurde. Es kann beispielsweise validiert werden, ob alle in dem Workflow-Modell angegebenen Ausführungsbedingungen valide sind.

Ein Workflow-Modell kann in mehreren Versionen in dem verteilten Repository-Netzwerk gespeichert werden. Vorteilhaft ist es hierbei, wenn eine Workflow-Instanz nur zu der aktuellsten Version des Workflow-Modells erzeugt werden kann. Befindet sich eine Workflow-Instanz in Ausführung, die gestartet wurde, bevor eine neue Version des Workflow-Modells in dem verteilten Repository-Netzwerk gespeichert wurde, dann wird diese Workflow-Instanz gemäß dem Workflow-Modell der älteren Version weiter ausgeführt.

In dem Workflow-Modell kann ein vorbestimmter Workflow-Schritt als Initialschritt definiert werden. Der Initialschritt eines Workflows ist jener Schritt, der beim Starten bzw. Ausführen einer Workflow-Instanz als erster Workflow-Schritt ausgeführt wird. Alternativ hierzu ist der erste Workflow-Schritt in dem Workflow-Modell der Initialschritt.

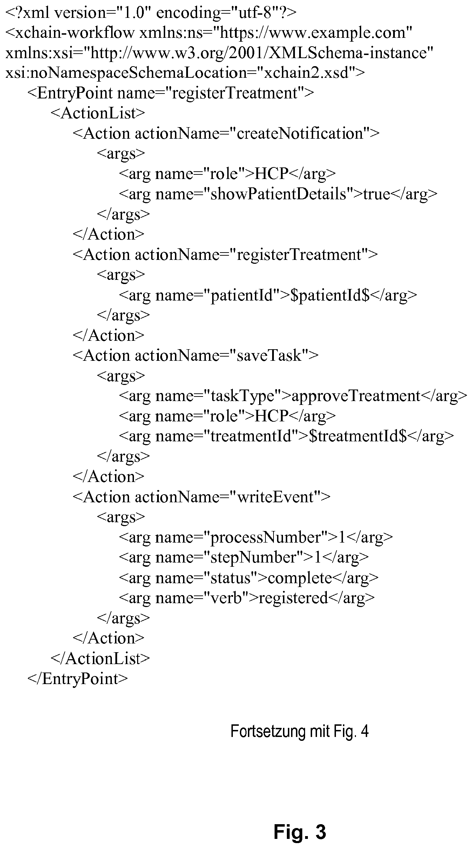

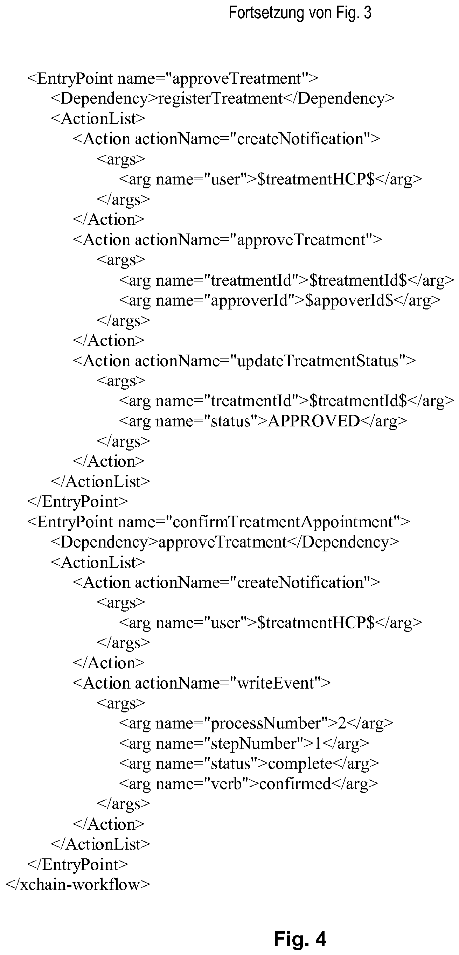

In einer Ausgestaltung der Erfindung kann das Workflow-Modell als XML-Datei erzeugt und in dem verteilten Repository-Netzwerk gespeichert werden. Ein Beispiel eines Workflow-Modells in einer XML-Notation ist in **Fig. 3** und **Fig. 4** gezeigt.

Die Knoten <EntryPoint> repräsentieren hierbei die Workflow-Schritte.

Der Knoten <Dependency> unterhalb des Knotens <EntryPoint> repräsentiert Ausführungsbedingungen, die vor dem Ausführen des jeweiligen Workflow-Schrittes erfüllt sein müssen, damit der Workflow-Schritt ausgeführt werden kann. Beispielsweise gibt der Knoten <Dependency>registerTreatment</Dependency> des Workflow-Schrittes "approveTreatment" (<EntryPoint name="approveTreatment">) an, dass der Workflow-Schritt "registerTreatment" (<EntryPoint name="registerTreatment">) erfolgreich abgeschlossen sein muss, bevor der Workflow-Schritt "approveTreatment" ausgeführt werden kann.

Die Knoten <Action> unterhalb des Knotens <ActionList> repräsentieren die Aktionen, die bei der Ausführung des Workflow-Schrittes einer Workflow-Instanz ausgeführt werden bzw. auszuführen sind. Mit den Konten <arg> können eine Anzahl von Argumenten für die jeweilige Aktion definiert werden. Werte von Argumenten, die zwischen zwei $ gesetzt sind (z.B. $patientId$) repräsentieren hierbei dynamische Werte, die während der Ausführung der Workflow-Instanz gesetzt werden (z.B. von der Workflow-Applikation). Solche dynamischen Werte können entweder in dem verteilten Repository-Netzwerk gespeichert sein und während der Ausführung des jeweiligen Workflow-Schritts aus dem verteilten Repository-Netzwerk ausgelesen und dem Clientsystem bzw. der Workflow-Applikation, die den Workflow-Schritt ausführt zur Verfügung gestellt werden. Alternativ können solche dynamischen Werte auch in der lokalen Speichereinrichtung des den Workflow-Schritt ausführenden Clientsystems gespeichert sein, wobei die jeweilige Workflow-Applikation zur Ausführung des Workflow-Schrittes den entsprechenden Wert aus der lokalen Speichereinrichtung auslesen kann.

Ausgezeichnete Aktionen sind <Action actionName="createNotification">, <Action actionName="saveTask"> und <Action actionName="writeEvent">.

Mit der Aktion "createNotification" wird eine Benachrichtigung erzeugt und in dem verteilten Repository-Netzwerk gespeichert, wobei mit dem Argument "user" der Benutzer bzw. mit dem Argument "role" die Benutzerrolle angegeben wird, für den bzw. die die Benachrichtigung bestimmt ist.

Mit der Aktion "saveTask" werden Aufgaben erzeugt die einem Benutzer oder einer Benutzerrolle zugeordnet werden, wobei mit dem Argument "user" der Benutzer bzw. mit dem Argument "role" die Benutzerrolle angegeben wird, für den bzw. die die Aufgabe bestimmt ist.

Mit der Aktion "writeEvent" werden Ereignisse, die beim Ausführen des Workflow-Schrittes in dem Computersystem auftreten, in dem verteilten Repository-Netzwerk gespeichert. Die Aktion

```
      <Action actionName="writeEvent">
         <args>
           <arg name="processNumber">2</arg>
           <arg name="stepNumber">1</arg>
           <arg name="status">complete</arg>
           <arg name="verb">confirmed</arg>
         </args>
      </Action>
```

gibt beispielsweise an, dass die durch "<arg name="stepNumber">1</arg>" angegebene Aktion des durch "<arg name="processNumber">2</arg>" angegebenen Workflow-Schrittes abgeschlossen und bestätigt ist. Bei einem als Blockchain ausgestalteten verteilten Repository-Netzwerk kann so der aktuelle Status einer Workflow-Instanz gespeichert werden, während alle vorangegangen gespeicherten Stati unveränderlich erhalten bleiben.

Letztlich kann mit der Aktion "writeEvent" der Status der ausgeführten Workflow-Instanz in dem verteilten Repository-Netzwerk gespeichert werden. Sind mehrere Stati zu einer Workflow-Instanz in dem verteilten Repository-Netzwerk gespeichert, dann gibt der zuletzt gespeicherte Status den aktuellen Status der Workflow-Instanz an.

Das in Fig. 3 und Fig. 4 gezeigte Workflow-Modell beschreibt einen einfachen Workflow für die Behandlung eines Patienten. Er umfasst drei Workflow-Schritte: "registerTreatment", "approveTreatment" und "confirmTreatmentAppointment".

Der Workflow-Schritt "registerTreatment" ist hier der Initialschritt, der beim Erzeugen der Workflow-Instanz ausgeführt wird.

Der Workflow-Schritt "registerTreatment" dient zum Initialisieren der Behandlung und umfasst hier vier Aktionen:
- "createNotification" - hiermit wird bei der Ausführung des Workflow-Schrittes eine Benachrichtigung für die Benutzerrolle "HCP" erstellt, wobei die Benachrichtigung Details zum Patienten enthält. Die Aktion "createNotification" ist die erste Aktion, die beim Ausführen des Initialschrittes ausgeführt wird. Das heißt, beim Erzeugen einer Workflow-Instanz wird als Erstes eine Benachrichtigung für die Benutzerrolle "HCP" erstellt und in dem verteilten Repository-Netzwerk gespeichert.
- "registerTreatment" - hiermit wird ein Behandlungsdatensatz erzeugt und in der lokalen Speichereinrichtung oder in dem verteilten Repository-Netzwerk gespeichert. Der Behandlungsdatensatz wird vorzugsweise verschlüsselt gespeichert. Alternativ kann ein verschlüsselter Hash-Wert des Behandlungsdatensatzes in dem verteilten Repository-Netzwerk gespeichert werden, während der Behandlungsdatensatz selbst in der lokalen Speichereinrichtung des Clientsystems gespeichert wird, in dem der Behandlungsdatensatz erzeugt wird. Ferner wird der Behandlungsdatensatz einem Patientendatensatz zugeordnet, wobei in dem verteilten Repository-Netzwerk lediglich eine eindeutige Kennung des Patientendatensatzes gespeichert und dem Behandlungsdatensatz zugeordnet wird.
- "saveTask" - hiermit eine Aufgabe erzeugt und zur Erledigung einem Benutzer oder einer Benutzerrolle zugeordnet. Bei dem in Fig. 3 gezeigten Beispiel wird die Aufgabe "approveTreatment" erzeugt und der Benutzerrolle "HCP" zugeordnet. Als weiteres Argument wird dieser Aktion eine Kennung der Behandlung bzw. des Behandlungsdatensatzes (treatmentId) übergeben.
- "writeEvent" - hiermit wird ein Ereignis erzeugt, mit dem die Ausführung des Workflow-Schrittes protokolliert wird. Anhand der erzeugten Ereignisse kann die Workflow-Applikation beispielsweise prüfen, ob ein bestimmter Workflow-Schritt korrekt beendet wurde, bevor ein weiterer Workflow-Schritt ausgeführt wird.

Dem Workflow-Schritt "registerTreatment" schließen sich die Workflow-Schritte "approveTreatment" und "confirmTreatmentAppointment" an. Diese beiden Workflow-Schritte weisen jeweils zusätzlich einen Knoten <Dependency> auf, der angibt, von welchem Workflow-Schritt der jeweilige Workflow-Schritt abhängt. Der Workflow-Schritt "approveTreatment" hängt hier beispielsweise von dem Workflow-Schritt "registerTreatment" ab, d.h. der Workflow-Schritt "registerTreatment" muss vollständig und korrekt ausgeführt worden sein, bevor der Workflow-Schritt "approveTreatment" ausgeführt werden kann. Diese Bedingungen können von der jeweiligen Workflow-Applikation geprüft werden.

Die übrigen Knoten der beiden Workflow-Schritte "approveTreatment" und "confirmTreatmentAppointment" entsprechen - entsprechend angepasst - den entsprechenden Knoten des Workflow-Schritts "registerTreatment".

Wie oben beschrieben, wird das auf dem Clientsystem 1 erzeugte Workflow-Modell WM bzw. die entsprechende XML-Datei in dem verteilten Repository-Netzwerk gespeichert. Das Workflow-Modell steht dann, gegebenenfalls nach einer Validierung, zur Ausführung bereit, d.h. es können Workflow-Instanzen des Workflow-Modells erzeugt und ausgeführt werden.

### Hauptschritt 2: Erzeugen einer Workflow-Instanz

Der Hauptschritt 2, d.h. das Erzeugen einer Workflow-Instanz basierend auf dem zuvor erzeugten Workflow-Modell, wird bei dem in Fig. 2 gezeigten Beispiel an dem zweiten Clientsystem (Client 2) ausgeführt. Hierzu ist an dem zweiten Clientsystem eine Workflow-Applikation WA vorgesehen, die auf Anforderung durch den Benutzer des zweiten Clientsystems eine Workflow-Instanz WI des im verteilten Repository-Netzwerk gespeicherten Workflow-Modells WM erzeugt und die erzeugte Workflow-Instanz in dem verteilten Repository-Netzwerk speichert.

Die Workflow-Instanz wird durch Ausführen des in dem Workflow-Modell definierten Initialschrittes erzeugt. Der Initialschritt kann der erste Workflow-Schritt in dem Workflow-Modell sein. Der Initialschritt wird von der Workflow-Applikation ausgeführt.

Zum Ausführen des Initialschrittes müssen die für diesen Workflow-Schritt in dem Workflow-Modell hinterlegen Ausführungsbedingungen erfüllt sein. Beispielsweise muss der Benutzer oder die Benutzerrolle, die den Initialschritt ausführen und damit die Workflow-Instanz erzeugen will, über entsprechende Berechtigungen verfügen. Das Prüfen der entsprechenden Ausführungsbedingungen, insbesondere der Berechtigungen kann von der Workflow-Applikation durchgeführt werden.

Beim Erzeugen der Workflow-Instanz wird ein Abbild des Workflow-Modells erzeugt und in dem verteilten Repository-Netzwerk gespeichert. Das Abbild des Workflow-Modells kann beispielsweise ein JSON-Dokument sein, in dem lediglich der Name und gegebenenfalls die Version des Workflow-Modells, die Namen der Workflow-Schritte, die Namen der Aktionen und die Stati der Workflow-Schritte gespeichert sind. Die Workflow-Instanzen können so deutlich kompakter gespeichert werden als das zugehörige Workflow-Modell. Die kompaktere (d.h. platzsparendere) Speicherung der Workflow-Instanz ist insbesondere deswegen von Bedeutung, da zu einem Workflow-Modell beliebig viele Workflow-Instanzen erzeugt werden können, die alle in dem verteilten Repository-Netzwerk gespeichert werden müssen. Der zuletzt gespeicherte Status einer Workflow-Instanz gibt hierbei jeweils an, wo sich die Workflow-Instanz bei der Ausführung aktuell befindet.

Beim Ausführen bzw. zum Ausführen des Initialschrittes erzeugt die Workflow-Applikation WA des zweiten Clientsystems (Client 2) eine Benachrichtigung N und speichert diese in dem verteilten Repository-Netzwerk. Das Erzeugen der Benachrichtigung N ist die erste auszuführende Aktion in dem Initialschritt. Bei dem in Fig. 3 gezeigten Beispiel ist die Aktion "createNotification" des Workflow-Schrittes "registerTreatment" die erste auszuführende Aktion.

Die Benachrichtigung wird in dem verteilten Repository-Netzwerk der Workflow-Instanz und ggf. einem Workflow-Schritt zugeordnet. Zudem wird in der Benachrichtigung angegeben, für welchen Benutzer bzw. für welche Benutzerrolle die Benachrichtigung erzeugt wurde. In dem genannten Beispiel ist die Benachrichtigung für die Benutzerrolle "HCP" bestimmt.

Für das Erzeugen der Benachrichtigung N verwendet die Workflow-Applikation WA einen Programmcode PC, der in dem verteilten Repository-Netzwerk gespeichert ist und der Aktion "createNotification" zugeordnet ist. Die Workflow-Applikation liest diesen Programmcode aus dem verteilten Repository-Netzwerk aus und bringt ihn auf dem Clientsystem (Client 2) zur Ausführung. Alternativ kann der Programmcode PC auch in der lokalen Speichereinrichtung SE des Clientsystems gespeichert sein und von dort zur Ausführung ausgelesen werden. In einer noch weiteren Alternative kann der PC auch Bestandteil der Workflow-Applikation WA sein.

Anschließend wird der Status der Workflow-Instanz in dem verteilten Repository-Netzwerk gespeichert. In vorliegenden Beispiel umfasst der Status nach dem Ausführen der ersten Aktion Daten darüber, dass sich die Workflow-Instanz nunmehr in dem ersten Workflow-Schritt befindet und dass als nächstes die zweite Aktion innerhalb des ersten Workflow-Schrittes auszuführen ist.

Das Erzeugen der Workflow-Instanz ist damit abgeschlossen.

Hauptschritt 3: Ausführen der Workflow-Instanz.

Nach dem erfolgreichen Erzeugen der Workflow-Instanz (d.h. nach dem Ausführen des Initialschrittes) können die weiteren in dem zur Workflow-Instanz dazugehörigen Workflow-Modell definierten Workflow-Schritte bzw. die weiteren in dem Initialschritt vorgesehenen Aktionen ausgeführt werden.

Die weiteren Workflow-Schritte bzw. die weiteren in dem Initialschritt vorgesehenen Aktionen können von verschiedenen Clientsystemen bzw. von Workflow-Applikationen verschiedener Clientsysteme ausgeführt werden. Gemäß dem in Fig. 2 gezeigten Beispiel werden dieses weiteren Workflow-Schritte bzw. die weiteren in dem Initialschritt vorgesehenen Aktionen von den Clientsystemen Client 3 bis Client n ausgeführt. Es ist erfindungsgemäß aber auch möglich, dass weitere Workflow-Schritte bzw. weitere Aktionen des Initialschrittes von dem ersten Clientsystem (Client 1), an dem das Workflow-Modell erzeugt wurde, und/oder von dem zweiten Clientsystem (Client 2), an dem die Workflow-Instanz erzeugt wurde, ausgeführt werden. Wo welche Workflow-Schritte konkret ausgeführt werden bzw. zur Ausführung gebracht werden, hängt in erster Linie davon ab, welchen Benutzern bzw. welchen Clientsystemen die jeweiligen Workflow-Schritte zugeordnet sind.

Bei dem in Fig. 3 / Fig. 4 gezeigten Beispiel ist der Workflow-Schritt "approveTreatment" der Benutzerrolle "HCP" zugeordnet, wie in dem Knoten 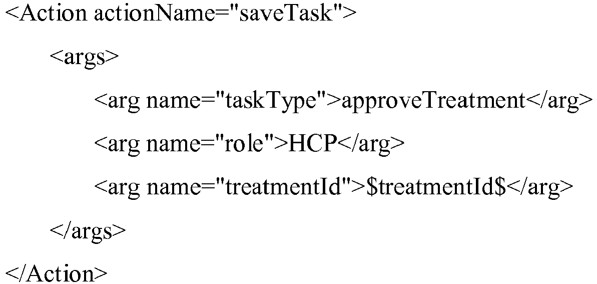 des Workflow-Modells definiert.

Ist nur der Benutzer des dritten Clientsystems (Client 3) der Benutzerrolle "HCP" zugeordnet, dann kann der Workflow-Schritt "approveTreatment" auch nur an dem dritten Clientsystem bzw. von der Workflow-Applikation des dritten Clientsystems ausgeführt werden (denn die Workflow-Applikation des dritten Clientsystems führt die entsprechende Prüfung der Ausführungsbedingungen durch).

Gemäß des in Fig. 3 / Fig. 4 gezeigten Beispiels eines Workflow-Modells ist die nächste nach dem Erzeugen der Workflow-Instanz auszuführende Aktion die Aktion "registerTreatment", wie in dem Knoten 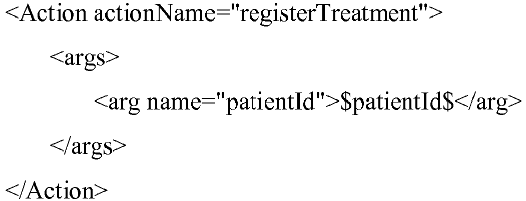 des Workflow-Modells definiert.

Für die nachfolgende Beschreibung wird angenommen, dass die weiteren Workflow-Schritte bzw. die weiteren in dem Initialschritt vorgesehenen Aktionen von bzw. an den Clientsystemen Client 3 und / oder Client n bzw. von den Workflow-Applikationen dieser Clientsysteme ausgeführt werden.

Ferner wird für die nachfolgende Beschreibung angenommen, dass der erste Workflow-Schritt "registerTreatment" (<EntryPoint name ="registerTreatment">) bereits vollständig und erfolgreich ausgeführt wurde.

Mit der Aktion "saveTask" des ersten Workflow-Schritts "registerTreatment" wurde eine Aufgabe erzeugt und zur Erledigung der Benutzerrolle "HCP" zugeordnet. In dem vorliegenden Beispiel besteht die Aufgabe darin, den Workflow-Schritt "approveTreatment" auszuführen.

Mit der Aktion ""writeEvent" des ersten Workflow-Schritts "registerTreatment" wurde der aktuelle Status der Workflow-Instanz in dem verteilten Repository-Netzwerk gespeichert.

Nach Abschluss des ersten Workflow-Schrittes "registerTreatment" wird die erste Aktion (createNotification) des zweiten Workflow-Schrittes ausgeführt. Mit der Aktion "createNotification" wird eine Benachrichtigung N für den in dem Argument "user" angegebenen Benutzer erzeugt. Dem Benutzer wird dadurch mitgeteilt, dass der Workflow-Schritt "approveTreatment" nunmehr ausgeführt werden kann.
- Die erzeugte Benachrichtigung kann von dem Clientsystem, an dem die Benachrichtigung erzeugt wurde, direkt an ein bestimmtes Clientsystem oder an den angegebenen Benutzer übertragen werden, beispielsweise in Form einer E-Mail.
- Alternativ kann die erzeugte Benachrichtigung in dem verteilten Repository-Netzwerk gespeichert werden und das verteilte Repository-Netzwerk kann die Benachrichtigung an ein bestimmtes Clientsystem oder an den angegebenen Benutzer übertragen.
- In einer noch weiteren Alternative kann die Benachrichtigung in dem verteilten Repository-Netzwerk gespeichert werden und die Clientsysteme bzw. die an den Clientsystemen ausgeführten Workflow-Applikationen WA können das verteilte Repository-Netzwerk nach Benachrichtigungen überwachen. Hierzu können die Workflow-Applikationen in regelmäßigen Abständen das verteilte Repository-Netzwerk nach vorhandenen Benachrichtigungen abfragen. Vorteilhaft kann es hierbei sein, wenn ein Workflow-Applikation nur solche Benachrichtigungen abfragt, die für das jeweilige Clientsystem bzw. für den Benutzer des Clientsystems bestimmt sind.

Unabhängig von der Art der Übermittlung der Benachrichtigung, kann es vorteilhaft sein, die Benachrichtigung zu verschlüsseln und im Falle der Speicherung der Benachrichtigung in dem verteilten Repository-Netzwerk die Benachrichtigung verschlüsselt zu speichern.

Nach Empfang einer Benachrichtigung durch das Clientsystem bzw. wenn eine Benachrichtigung für das Clientsystem in dem verteilten Repository-Netzwerk vorliegt, kann das Clientsystem bzw. die jeweilige Workflow-Applikation den entsprechenden Workflow ausführen. Bei dem hier gezeigten Beispiel wird der Benutzer "treatmentHCP" mit der Benachrichtigung darüber informiert, dass der Workflow-Schritt "approveTreatment" nunmehr ausgeführt werden kann.

Der Workflow-Schritt "approveTreatment" kann dann von der Workflow-Applikation des entsprechenden Clientsystems ausgeführt werden. Die erste vom Clientsystem auszuführende Aktion des Workflow-Schritts "approveTreatment" ist hierbei die Aktion "approveTreatment" (<Action name ="approveTreatment">), d.h., die erste Aktion nach der Aktion "CreateNotification".

Um die Aktion "approveTreatment" auszuführen, kann die Workflow-Applikation einen Programmcode zur Ausführung bringen, der der Aktion "approveTreatment" zugeordnet ist. Der entsprechende Programmcode PC kann als Smart Contract oder als Chaincode in dem verteilten Repository-Netzwerk gespeichert sein und zur Ausführung an das entsprechende Clientsystem übertragen werden. Alternativ kann der entsprechende Programmcode auch in der Speichereinrichtung SE des jeweiligen Clientsystems gespeichert sein.

Vor oder beim Ausführen des der Aktion "approveTreatment" zugeordneten Programmcodes kann es vorgesehen sein zu prüfen, ob die Bedingungen für das Ausführen der Aktion erfüllt sind.

Eine der Bedingungen ist in dem Workflow-Modell definiert, nämlich durch das Knoten "<Dependency>registerTreatment</Dependency>". Dieser Knoten gibt an, dass der Workflow-Schritt "approveTreatment" erst dann ausgeführt werden kann, wenn der Workflow-Schritt "registerTreatment" erfolgreich abgeschlossen wurde. Das erfolgreiche Beenden des Workflow-Schritts "registerTreatment" kann die Workflow-Applikation anhand der Stati der Workflow-Instanz ermitteln. Beispielsweise wird als letzte Aktion des Workflow-Schrittes "registerTreatment" die Aktion "writeEvent" ausgeführt, die das erfolgreiche Beenden des Workflow-Schrittes "registerTreatment" als Status in dem verteilten Repository-Netzwerk speichert. Ist dieser Status in dem verteilten Repository-Netzwerk vorhanden, dann kann die Bedingung des Knotens "<Dependency>registerTreatment</Dependency>" von der Workflow-Applikation positiv validiert werden und dieses Ausführungsbedingung ist erfüllt.

Eine weitere Bedingung, die für die Ausführung des Workflow-Schrittes "approveTreatment" erfüllt sein muss, kann die entsprechende Berechtigung des ausführenden Benutzers sein. Gemäß dem in Fig. 3 / Fig. 4 gezeigten Beispiel wurde in dem ersten Workflow-Schritt "registerTreatment" mit der Aktion "saveTask" die Aufgabe "approveTreatment" für die Benutzerrolle "HCP" erzeugt. Das bedeutet, dass der Workflow-Schritt "approveTreatment" nur von einem Benutzer ausgeführt werden kann, dem die Rolle "HCP" zugeordnet ist. Diese Zuordnung kann von der Workflow-Applikation geprüft werden.

In einer Ausgestaltung der Erfindung kann es notwendig sein, dass die Workflow-Applikation für die Ausführung des Programmcodes zusätzliche Daten benötigt. Solche Daten können in der Speichereinrichtung SE des Clientsystems oder in dem verteilten Repository-Netzwerk gespeichert sein. Alternativ oder zusätzlich können solche Daten auch durch den Benutzer bereitgestellt werden. Sofern solche Daten in dem verteilten Repository-Netzwerk gespeichert sind, kann es vorteilhaft sein, wenn dieses Date kryptographisch verschlüsselt oder zumindest signiert sind. Die Verschlüsselung der Daten stellt hierbei eine implizite Bedingung für die Ausführung des jeweiligen Workflow-Schrittes dar - denn wenn die Daten nicht entschlüsselt werden können, kann auch der Workflow-Schritt auch nicht erfolgreich ausgeführt werden. D.h. nur jene Instanzen (Benutzer, Rolle, Workflow-Applikation) können den entsprechenden Workflow-Schritt erfolgreich ausführen, die über einen entsprechenden Schlüssel zum Entschlüsseln der Daten verfügen.

Ferner kann es vorgesehen sein, dass die Workflow-Applikation, die den Programmcode ausführt, Daten erzeugt, die anschließend gespeichert werden müssen. Diese Daten können in der lokalen Speichereinrichtung SE des jeweiligen Clientsystems oder in dem verteilten Repository-Netzwerk gespeichert werden. Für den Fall, dass die Daten in dem verteilten Repository-Netzwerk gespeichert werden, kann es vorteilhaft sein, wenn dieses Daten verschlüsselt gespeichert werden, beispielsweise mit einem öffentlichen Schlüssel jener Instanz (Benutzer, Rolle, Workflow-Applikation), die die Daten anschließend lesen können muss.

Alternativ können anstelle der Daten selbst auch Hash-Werte der Daten in dem verteilten Repository-Netzwerk gespeichert werden, beispielsweise dann, wenn die Daten selbst nicht benötigt werden. So reicht es etwa aus, wenn ein erster Workflow-Schritt zu Patientendaten einen Hashwert berechnet und diesen in dem verteilten Repository-Netzwerk speichert, damit ein zweiter Workflow-Schritt Behandlungsdaten in dem verteilten Repository-Netzwerk den Patientendaten zuordnen kann. Die Behandlungsdaten werden dann in dem verteilten Repository-Netzwerk dem Hashwert zugeordnet. Die Patientendaten selbst können damit ausschließlich in einem bestimmten Clientsystem gespeichert werden und bleiben so geschützt.

Für den Zugriff der Workflow-Applikation auf die in dem Clientsystem gespeicherten Daten bzw. zum Speichern von Daten in dem Clientsystem kann eine sogenannte Trusted Computing Appliance TCA bereitgestellt werden. Eine Trusted Computing Appliance TCA ist eine vertrauenswürdige und speziell gesicherte Umgebung des Clientsystems, in der eine oder mehrere vertrauenswürdige Softwarekomponenten ausgeführt werden. Der Austausch der Daten zwischen der Workflow-Applikation und der Speichereinrichtung des Clientsystems kann über die Trusted Computing Appliance TCA bzw. über die vertrauenswürdigen Softwarekomponenten der Trusted Computing Appliance TCA abgewickelt werden.

Der Quellcode der vertrauenswürdigen Softwarekomponente, nachfolgend auch als Trustlet bezeichnet, wird vorzugsweise von allen Beteiligten des Systems verifiziert.

Zum Abfragen von Daten, die in dem Clientsystem gespeichert sind, durch die Workflow-Applikation kann das Trustlet eine entsprechende Anfrage der Workflow-Applikation entgegennehmen. Das Trustlet führt dann die Abfrage aus und übergibt die abgefragten Daten an die Workflow-Applikation.

Hierbei kann es vorteilhaft sein, wenn das Trustlet die ausgelesenen Daten mit einem dem Trustlet zugeordneten privaten Schlüssel signiert und die signierten Daten der Workflow-Applikation zur Verfügung stellt. Die Workflow-Applikation kann dann die Signatur der Daten mit dem öffentlichen Schlüssel des Trustlets validieren und die Daten nur bei einer erfolgreichen Validierung weiterverarbeiten.

Sollten die an die Workflow-Applikation übergebenen signierten Daten in dem verteilten Repository-Netzwerk gespeichert werden, etwa weil diese in einem nachfolgenden Workflow-Schritt benötigt werden, ist es vorteilhaft, wenn die Daten in signierter Form in dem verteilten Repository-Netzwerk gespeichert werden. Der öffentliche Schlüssel des Trustlets wird ebenfalls in dem verteilten Repository-Netzwerk gespeichert. Damit können auch Workflow-Applikationen, die auf einem anderen Clientsystem ausgeführt werden, die Signatur der Daten mit Hilfe des öffentlichen Schlüssels des signierenden Trustlets validieren.

In einer Ausgestaltung der Erfindung kann jedem Trustlet dasselbe kryptographische Schlüsselpaar zugeordnet werden, sodass nur ein öffentlicher Schlüssel in dem verteilten Repository-Netzwerk gespeichert werden muss. In einer weiteren Ausgestaltung der Erfindung ist es aber möglich, dass jedem Trustlet oder zumindest einigen Trustlets verschiedene kryptographische Schlüsselpaare zugeordnet werden, wobei die jeweiligen öffentlichen Schlüssel in dem verteilten Repository-Netzwerk gespeichert werden.

In einer weiteren Ausgestaltung der Erfindung kann die Trusted Computing Appliance TCA eine Speichereinrichtung aufweisen (eine sogenannten private Speichereinrichtung der TCA), die damit ebenfalls in einer vertrauenswürdigen und speziell gesicherten Umgebung des Clientsystems vorhanden ist. Vorteilhaft ist es hierbei, wenn auf diese private Speichereinrichtung der TCA nur das Trustlet zugreifen kann. Bei dieser Ausgestaltung der Erfindung kann das Trustlet neben Daten aus der Speichereinrichtung SE des Clientsystems auch Daten aus der private Speichereinrichtung der TCA auslesen. Vorteilhaft ist es hierbei, wenn die aus der privaten Speichereinrichtung der TCA ausgelesenen Daten nicht an die Workflow-Applikation übertragen werden. Für die aus der privaten Speichereinrichtung der TCA ausgelesenen Daten kann eine Prüfung durchgeführt werden, ob diese vorbestimmte Bedingungen erfüllen. Das Ergebnis dieser Prüfung kann an die Workflow-Applikation übertragen werden ohne die Daten selbst an die Workflow-Applikation übertragen zu müssen. Das Ergebnis dieser Prüfung kann vor dem Übertragen an die Workflow-Applikation digital signiert werden.

Umgekehrt kann das Trustlet auch Daten, die das Trustlet von der Workflow-Applikation empfängt oder von der privaten Speichereinrichtung der TCA ausliest, in der Speichereinrichtung SE des Clientsystems speichern oder an das Datenverarbeitungssystem DV des Clientsystems übergeben. Auch hierbei können die Daten von dem Trustlet digital signiert werden und vor dem Speichern in der Speichereinrichtung SE des Clientsystems kann die Signatur der Daten validiert werden, beispielsweise von dem Datenverarbeitungssystem DV des Clientsystems.

In einer weiteren Ausgestaltung der Erfindung kann die Workflow-Applikation selbst ein Trustlet sein, das in der Trusted Computing Appliance TCA ausgeführt wird (siehe Client n in Fig. 2). In diesem Fall kann der Programmcode, der für die Ausführung der Workflow-Schritte benötigt wird, Bestandteil des Trustlets sein. Alternativ oder zusätzlich kann der Programmcode auch in dem verteilten Repository-Netzwerk gespeichert werden. Der in dem verteilten Repository-Netzwerk gespeicherte Programmcode wird wie das Trustlet selbst von allen Beteiligten des Systems verifiziert und digital signiert in dem verteilten Repository-Netzwerk gespeichert. Die als Trustlet ausgebildete Workflow-Applikation kann dann den für die Ausführung eines Workflow-Schrittes benötigten Programmcode von dem verteilten Repository-Netzwerk lesen und in der Trusted Computing Appliance TCA zur Ausführung bringen. Die Workflow-Applikation kann hierbei prüfen, ob die Signatur des Programmcodes valide ist, bevor der Programmcode ausgeführt wird.

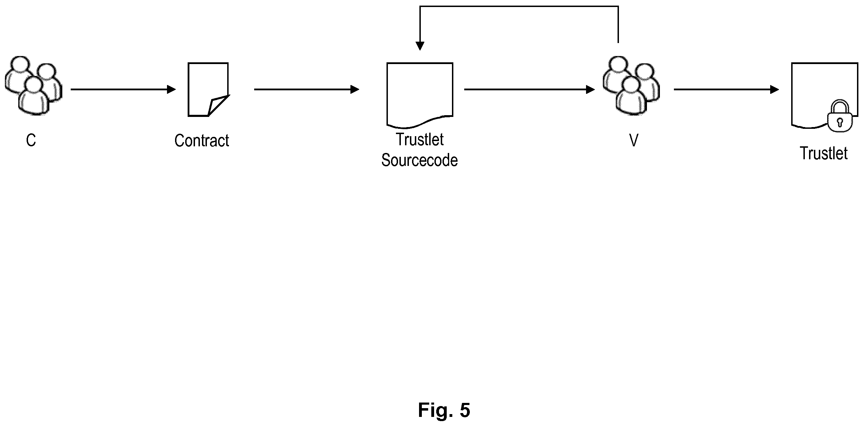

Fig. 5 zeigt einen exemplarischen Ablauf für das Erzeugen einer vertrauenswürdigen Softwarekomponente (Trustlet).

Eine Gruppe von Inhabern bzw. Besitzern C von vertrauenswürdigen Daten einigen sich auf ein Referenzdokument, etwa ein Vertrag (Contract), in dem die wesentlichen Punkte, sogenannte Checkpoints, für das Validieren von vertrauenswürdigen Daten festgelegt sind.

Basierend auf diesem Referenzdokument bzw. auf die in dem Referenzdokument enthaltenen Checkpoints wird der Quellcode des Trustlets erstellt.

Der Quellcode des Trustlets wird anschließend von einer Person oder mehreren Personen V geprüft bzw. verifiziert. Sollten sich hierbei Fehler, Unstimmigkeiten oder Abweichungen zu den in dem Referenzdokument enthaltenen Checkpoints ergeben, wird der Quellcode des Trustlets angepasst und anschließend erneut geprüft bzw. verifiziert. Dieser Vorgang wird so lange durchgeführt, bis der Source Code des Trustlets keinerlei Abweichungen von den in dem Referenzdokument enthaltenen Checkpoints mehr aufweist und der Source Code des Trustlets damit als verifiziert gilt. Anschließend wird aus dem Source Code des Trustlets das Trustlet erzeugt, beispielsweise in Form eines ausführbaren Programms.

Zu diesem Zeitpunkt kann das Trustlet digital signiert werden. In einer alternativen Ausgestaltung der Erfindung kann das Trustlet dann digital signiert werden, wenn es auf einem Serversystem in einer vertrauenswürdigen und gesicherten Umgebung des Serversystems installiert wird. In dem alternativen Fall kann die digitale Signatur für das Trustlet mit einem dem Serversystem zugeordneten, privaten Schlüssel erzeugt werden. Wenn jedes Serversystem unterschiedliche, private Schlüssel besitzt, können durch Server und Trustlet unterschiedliche digitale Signaturen erzeugt werden, selbst wenn ein und dasselbe Trustlet auf mehreren Serversystemen installiert wird.

Erfindungsgemäß ist es vorgesehen, dass die digitale Signatur in einem verteilten Repository-Netzwerk, etwa in einem Blockchain-Netzwerk, gespeichert wird. Damit kann das auf dem Serversystem installierte Trustlet Daten erzeugen, die erzeugten Daten mit seinem privaten Schlüssel signieren und die signierten Daten beispielsweise an ein Clientsystem übermitteln. Das Clientsystem kann dann mit Hilfe des in dem verteilten Repository-Netzwerk gespeicherten öffentlichen Schlüssels des Serversystems die Signatur der Daten prüfen und die Daten beispielsweise nur dann weiterverarbeiten, wenn die Prüfung der Signatur erfolgreich ist.

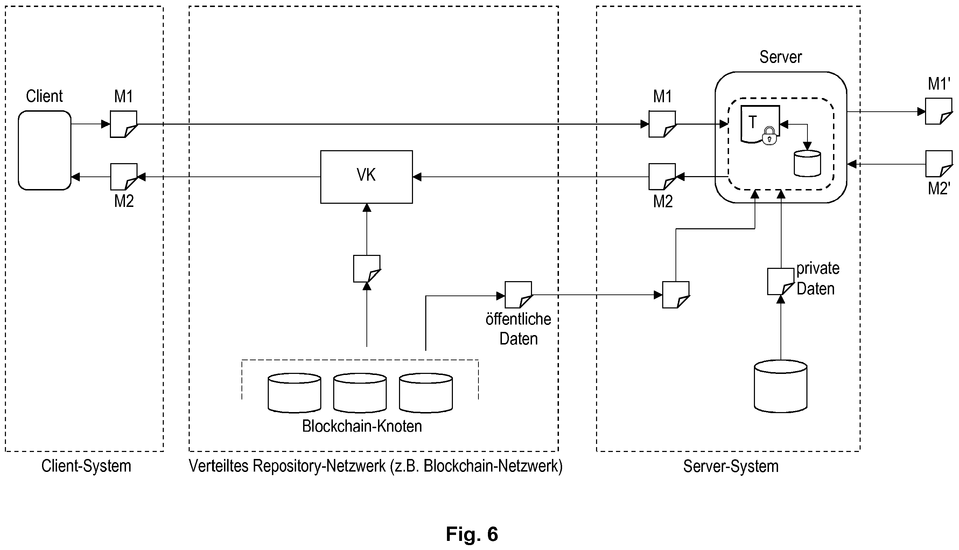

Fig. 6 zeigt ein Blockdiagramm, anhand dessen das Verfahren zum sicheren Validieren von vertrauenswürdigen Daten näher beschrieben wird.

Fig. 6 zeigt ein Clientsystem, ein mit dem Clientsystem operativ gekoppeltes verteiltes Repository-Netzwerk und ein mit dem verteilten Repository-Netzwerk gekoppeltes Serversystem. Bei dem verteilten Repository-Netzwerk handelt es sich vorzugsweise um ein Blockchain-Netzwerk, das aus mehreren verteilten Blockchain-Knoten gebildet sein kann.

Das Serversystem umfasst im Wesentlichen einen Server, der eine vertrauenswürdige und gesicherte Umgebung (Trusted Execution Environment) bereitstellt. In dieser vertrauenswürdigen und gesicherten Umgebung des Servers wird das Trustlet T installiert. Das Trustlet T wird ausschließlich in dieser vertrauenswürdigen und gesicherten Umgebung ausgeführt.

In einer Ausgestaltung der Erfindung kann in der vertrauenswürdigen und gesicherten Umgebung eine Speichereinrichtung vorhanden sein, die operativ mit dem Trustlet gekoppelt ist. Auf diese Speichereinrichtung kann vorzugsweise nur das Trustlet lesend und schreibend zugreifen. Das Trustlet kann aber auch auf eine außerhalb der vertrauenswürdigen und gesicherten Umgebung vorhandene Speichereinrichtung SE des Serversystems zugreifen, wobei in Fig. 6 nur der lesende Zugriff gezeigt ist.

Beim Installieren des Trustlets in der vertrauenswürdigen und gesicherten Umgebung des Servers wird das Trustlet digital signiert bzw. es wird eine digitale Signatur des Trustlets erzeugt. Die digitale Signatur des Trustlets wird dann in dem verteilten Repository-Netzwerk gespeichert.

Am Client des Clientsystems wird eine erste Validierungs-Anfragenachricht M1 erzeugt, die in dem verteilten Repository-Netzwerk gespeichert wird und an den Server des Serversystems übertragen wird. Die erste Validierungs-Anfragenachricht M1 umfasst hierbei Informationen darüber, welche Daten von dem Server des Serversystems zu validieren sind bzw. welche Daten von dem Server abgefragt werden sollen. Beispielsweise kann mit der ersten Validierungs-Anfragenachricht M1 am Server des Serversystems angefragt werden, ob bestimmte Daten in dem Serversystem gespeichert sind, sei es in der sicheren und vertrauenswürdigen Umgebung vorhandenen Speichereinrichtung, sei es in der Speichereinrichtung SE des Serversystems.

Der Server des Serversystems nimmt die erste Validierungs-Anfragenachricht M1 entgegen und übergibt diese dem in der vertrauenswürdigen und gesicherten Umgebung ausgeführten Trustlet T.

Das Trustlet T liest basierend auf der ersten Validierungs-Anfragenachricht eine Anzahl von Datensätzen aus der Speichereinrichtung SE und/oder aus der in der vertrauenswürdigen und gesicherten Umgebung vorhandenen Speichereinrichtung aus. Nach dem Auslesen der Datensätze erzeugt das Trustlet T eine erste Validierungs-Antwortnachricht M2 und fügt in diese Antwortnachricht die ausgelesenen Datensätze ein.

In einer Ausgestaltung der Erfindung kann es vorgesehen sein, dass das Trustlet für zumindest einen ausgelesenen Datensatz überprüft, ob dieser vorbestimmte Bedingungen erfüllt. Der zumindest eine ausgelesene Datensatz kann auch ein Aggregat von Datensätzen sein bzw. umfassen. In diesem Fall kann das Trustlet in die Validierungs-Antwortnachricht Informationen darüber einfügen, welche der ausgelesenen Datensätze oder das Aggregat der Datensätze die vorbestimmte Bedingung erfüllen, ohne hierbei die Datensätze selbst in die Validierungs-Antwortnachricht M2 einfügen zu müssen.

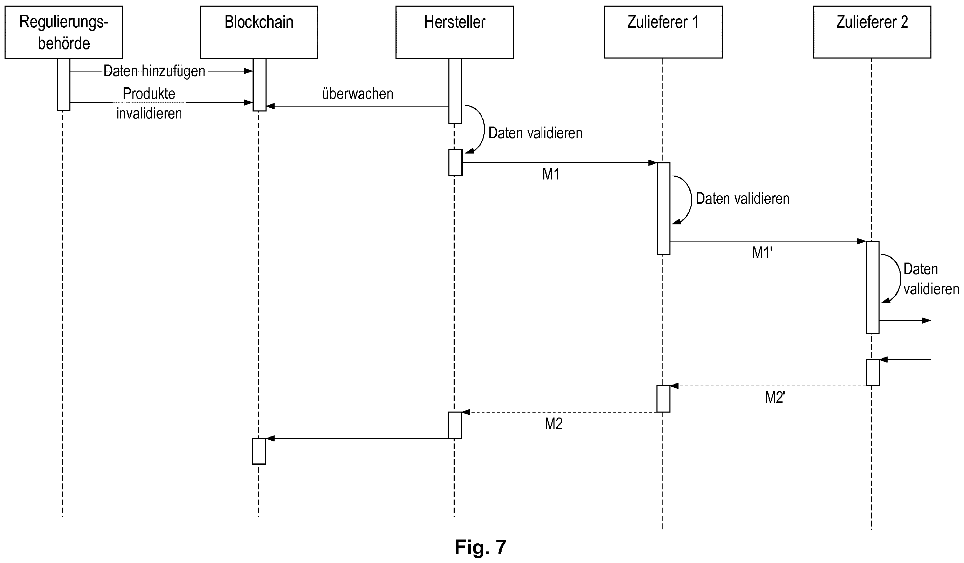

Die Bedingungen, die hierbei geprüft bzw. überprüft werden, können beliebig sein. Ein konkretes Beispiel hierfür wird mit Bezug auf Fig. 7 beschrieben.

In einer Ausgestaltung der Erfindung kann die Validierungs-Anfragenachricht M1 Referenzen zu Daten, die in dem Serversystem (in der Speichereinrichtung SE oder in der vertrauenswürdigen und gesicherten Umgebung vorhandenen Speichereinrichtung) gespeichert sind, und/oder Referenzen zu Daten, die in dem verteilten Repository-Netzwerk gespeichert sind, enthalten. Für die Bearbeitung der Validierungs-Anfragenachricht M1 kann das Trustlet sowohl Daten aus dem verteilten Repository-Netzwerk als auch Daten, die in dem Serversystem gespeichert sind, auslesen.

Die erste Validierungs-Antwortnachricht M2 wird in dem Repository-Netzwerk gespeichert und an das Clientsystem übertragen. Vorteilhaft ist es hierbei, wenn sowohl die erste Validierungs-Anfragenachricht M1, als auch die erste Validierungs-Antwortnachricht M2 verschlüsselt in dem Repository-Netzwerk gespeichert werden.

In einer besonderen Ausgestaltung der Erfindung kann es vorgesehen sein, dass die erste Validierungs-Antwortnachricht M2 von dem Server bzw. von dem Trustlet digital signiert wird, wobei die signierte erste Validierungs-Antwortnachricht in dem verteilten Repository-Netzwerk gespeichert wird. In dem Repository-Netzwerk kann nun die Signatur der ersten Validierungs-Antwortnachricht M2 mit einem öffentlichen Schlüssel des Servers bzw. des Trustlets validiert werden. Der öffentliche Schlüssel des Servers bzw. des Trustlets ist ebenfalls in dem verteilten Repository-Netzwerk gespeichert. Bei einer positiven Validierung kann die Validierungs-Antwortnachricht an das Clientsystem bzw. an den Client übertragen werden. Die Validierung kann von einer Validierungskomponente VK durchgeführt werden, die in dem verteilten Repository-Netzwerk ausgeführt wird.

Diese Art der Validierung der Validierungs-Antwortnachricht M2 kann auch von dem Client selbst durchgeführt werden. Das heißt, die digital signierte erste Validierungs-Antwortnachricht wird in dem verteilten Repository-Netzwerk gespeichert und an den Client übertragen. Der Client validiert dann mit Hilfe des in dem verteilten Repository-Netzwerk gespeicherten öffentlichen Schlüssels des Servers bzw. des Trustlets die Signatur der Validierungs-Antwortnachricht. Bei einer positiven Validierung der Signatur kann das Clientsystem bzw. der Client die erste Validierungs-Antwortnachricht weiterverarbeiten. Anderenfalls kann die erste Validierungs-Antwortnachricht verworfen werden.

Auf dem Serversystem, d.h. in der Speichereinrichtung SE des Serversystems bzw. in der Speichereinrichtung der vertrauenswürdigen und gesicherten Umgebung des Servers können demnach vertrauenswürdige Daten gespeichert werden, während in dem verteilten Repository-Netzwerk nicht-vertrauenswürdige Daten gespeichert werden können. Mit dem erfindungsgemäßen Verfahren ist es damit möglich, auf dem Serversystem gespeicherte vertrauenswürdige Daten zu validieren, ohne dass die Daten selbst offengelegt werden bzw. nur jene Daten offengelegt werden, die ohnehin nicht vertrauenswürdig sind, da sie beispielsweise in dem verteilten Repository-Netzwerk gespeichert sind. Ein entsprechendes Beispiel hierzu wird nachfolgend mit Bezug auf Figur 7 näher beschrieben.

Sofern der Server des Serversystems die Validierungs-Anfragenachricht M1 nicht selbst vollständig beantworten kann, kann es vorgesehen sein, dass das Serversystem basierend auf der ersten Validierungs-Anfragenachricht M1 eine zweite Validierungs-Anfragenachricht M1' erzeugt und diese an ein weiteres Serversystem übergibt und in dem verteilten Repository-Netzwerk speichert. Das weitere Serversystem kann dann in entsprechender Weise eine zweite Validierungs-Antwortnachricht M2' erzeugen und diese in dem verteilten Repository-Netzwerk speichern und an das Serversystem übertragen. In diesem Fall stellt das Serversystem im Bezug auf das weitere Serversystem ein Clientsystem dar. Das weitere Serversystem kann ebenfalls einen Server mit einer gesicherten und vertrauenswürdigen Umgebung aufweisen, in dem ebenfalls ein Trustlet ausgeführt wird. Auf diese Art und Weise kann eine hierarchische bzw. mehrstufige Validierung von vertrauenswürdigen Daten realisiert werden.

**Fig. 7** zeigt ein Ablaufdiagramm für eine mehrstufige bzw. hierarchische Validierung von vertrauenswürdigen Daten.

Der Ablauf wird anhand eines Beispiels beschrieben, bei dem ein Hersteller eines Produktes, beispielsweise eines Kosmetikproduktes, bestimmte Inhaltsstoffe auf der Verpackung bzw. auf dem Etikett angeben muss. Diese deklarierungspflichtigen Inhaltsstoffe werden von einer Regulierungsbehörde vorgegeben. Der Hersteller des Kosmetikproduktes verwendet für die Herstellung ihm bekannte Inhaltsstoffe und kauft bestimmte Komponenten des Kosmetikproduktes von einem ersten Lieferanten zu, wobei der Hersteller die exakte Zusammensetzung dieser Komponenten nicht kennt. Der erste Lieferant kann wiederum Komponenten von einem zweiten Lieferanten zukaufen, wobei der erste Lieferant die Zusammensetzung der von dem zweiten Lieferanten bezogenen Komponenten nicht kennt.

Damit der Hersteller des Kosmetikproduktes alle deklarierungspflichtigen Inhaltsstoffe angeben kann, muss der Hersteller des Kosmetikproduktes sämtliche deklarierungspflichtigen Inhaltsstoffe von sämtlichen Lieferanten in der gesamten Lieferkette abfragen. Eine solche Abfrage dauert im Stand der Technik unter Umständen mehrere Wochen oder gar mehrere Monate, da alle Lieferanten manuell angefragt werden müssen. Im schlimmsten Fall muss so die Auslieferung der hergestellten Kosmetikprodukte gestoppt bzw. verschoben werden. Zudem haben die Zulieferer keinerlei Interesse daran, die Zusammensetzungen der gelieferten Komponenten offenzulegen. Vielmehr wollen die Zulieferer nur die deklarierungspflichtigen Bestandteile der Komponenten offenlegen.

Mit dem erfindungsgemäßen Verfahren zum Validieren von vertrauenswürdigen Daten ist es einerseits möglich, dass nur nicht-vertrauenswürdige Daten (in diesem Beispiel die deklarierungspflichtigen Inhaltsstoffe) offengelegt werden. Andererseits kann der gesamte Validierungsprozess auf wenige Minuten bzw. sogar auf wenige Sekunden reduziert werden, sodass Lieferverzögerungen effektiv verhindert werden.

In dem verteilten Repository-Netzwerk bzw. in der Blockchain werden Daten zu den von der Regulierungsbehörde regulierten Substanzen bzw. Inhaltsstoffen abgelegt. Sämtliche an dem Validierungsprozess beteiligte Instanzen (Hersteller und Zulieferer) können auf diese in der Blockchain gespeicherten Daten zugreifen. Ferner werden von der Regulierungsbehörde solche Produkte registriert, die zumindest einen deklarierungspflichtigen Inhaltsstoff aufweisen.

Sobald Daten eines neuen deklarierungspflichtigen Inhaltsstoffes dem verteilten Repository-Netzwerk hinzugefügt wird bzw. die Daten eines bereits dem verteilten Repository-Netzwerk hinzugefügten Inhaltsstoff von der Regulierungsbehörde geändert werden, werden in dem verteilten Repository-Netzwerk die Daten der Produkte als invalide gekennzeichnet, die einen solchen neuen oder geänderten deklarierungspflichtigen Inhaltsstoff aufweisen.

Der Hersteller des Kosmetikproduktes überwacht die in dem verteilten Repository-Netzwerk gespeicherten Daten. Sobald sich für ihn relevante Daten in dem Repository-Netzwerk geändert haben bzw. neue Daten dem Repository-Netzwerk hinzugefügt wurden, kann der Hersteller des Kosmetikproduktes den Validierungsprozess für seine Produkte starten. Das Überwachen des verteilten Repository-Netzwerks bzw. das Starten des Validierungsprozesses wird von einem dem Hersteller zugeordneten Clientsystem bewerkstelligt.

Sobald das dem Hersteller zugeordnete Clientsystem eine Änderung der in dem verteilten Repository-Netzwerk gespeicherten Daten feststellt, prüft das Clientsystem, welche Komponenten des Kosmetikproduktes von einem externen Zulieferer bereitgestellt werden. Bei dem in Figur 7 gezeigten Ausführungsbeispiel wird eine solche Komponente vom Zulieferer 1 bereitgestellt.

Das Clientsystem erzeugt dann eine erste Validierungs-Anfragenachricht M1 und überträgt diese an das Serversystem des ersten Zulieferers (Zulieferer 1), wobei die erste Validierungs-Anfragenachricht M1 auch in dem verteilten Repository-Netzwerk gespeichert wird. Die erste Validierungs-Anfragenachricht M1 enthält hierbei Informationen dazu, welche Daten von dem Serversystem des ersten Zulieferers zu validieren sind. Im vorliegenden Fall kann die erste Validierungs-Anfragenachricht Informationen darüber umfassen, dass eine bestimmte vom ersten Zulieferer gelieferte Komponente validiert werden muss, d.h., die für diese Komponente regulierten Inhaltsstoffe dem Hersteller bzw. dem Clientsystem mitgeteilt werden sollen.

Der Server des ersten Zulieferers nimmt die erste Validierungs-Anfragenachricht M1 entgegen und übergibt diese dem Trustlet, das in der gesicherten und vertrauenswürdigen Umgebung des Servers ausgeführt wird.

Das Trustlet analysiert nun die Inhaltsstoffe der zu validierenden Komponente, wobei in dem vorliegenden Beispiel ein Inhaltsstoff wiederum eine Komponente ist, die von dem Zulieferer 2 dem Zulieferer 1 geliefert wird.

Für alle Inhaltsstoffe, die nicht von einem weiteren Zulieferer zugeliefert werden, überprüft das Trustlet des Servers des ersten Zulieferers, ob diese vorbestimmte Bedingungen erfüllen. Erfüllt ein Inhaltsstoff die vorbestimmte Bedingung, muss dieser Inhaltsstoff dem Hersteller des Kosmetikproduktes bzw. dem Clientsystem mitgeteilt werden. Eine vorbestimmte Bedingung kann beispielsweise sein, dass es sich bei dem Inhaltsstoff um einen regulierten bzw. deklarationspflichtigen Inhaltsstoff handelt. Zum Überprüfen, ob ein Inhaltsstoff solche Bedingungen erfüllt, führt das Trustlet einen Abgleich der Daten der Inhaltsstoffe mit den im Repository-Netzwerk gespeicherten Daten durch, wobei das Trustlet ermittelt, ob zu den Daten eines Inhaltsstoffes korrespondierende Daten in dem verteilten Repository-Netzwerk gespeichert sind. Die vorbestimmte Bedingung kann hierbei als erfüllt angesehen werden, wenn zu den Daten eines Inhaltsstoffes entsprechende Datensätze in dem Repository-Netzwerk gespeichert sind.

Das Trustlet des Servers des ersten Zulieferers erzeugt nun eine erste Validierungs-Antwortnachricht M2 und fügt dieser Validierungs-Antwortnachricht Informationen zu jenen Inhaltsstoffen hinzu, die die vorbestimmten Bedingungen erfüllen. Inhaltsstoffe, die die vorbestimmten Bedingungen nicht erfüllen, werden der Validierungs-Antwortnachricht M2 nicht hinzugefügt, sodass diese dem Client bzw. dem Hersteller des Kosmetikproduktes nicht offengelegt werden. Die Rezeptur der mit der ersten Validierungs-Anfragenachricht M1 angefragten und zu validierenden Komponente muss damit nicht offengelegt werden und bleibt somit geheim.

Bevor die Validierungs-Antwortnachricht M2 an das Clientsystem übermittelt wird, erzeugt der Server bzw. das Trustlet des Servers des ersten Zulieferers für die Komponenten, die von dem zweiten Zulieferer zugeliefert werden, in entsprechender Weise eine zweite Validierungs-Anfragenachricht M1' und überträgt diese an den Server des zweiten Zulieferers.

Der Server des zweiten Zulieferers nimmt diese zweite Validierungs-Anfragenachricht M1' entgegen und übergibt diese dem Trustlet des Servers, das ebenfalls in einem gesicherten und vertrauenswürdigen Bereich des Servers ausgeführt wird. Das Trustlet des Servers des zweiten Zulieferers überprüft ebenfalls, welche Inhaltsstoffe der angefragten Komponente vorbestimmte Bedingungen erfüllen, beispielsweise deklarierungspflichtig oder reguliert sind. Die Vorgehensweise ist hierbei analog zu dem Trustlet des Servers des ersten Zulieferers. Das heißt, das Trustlet des Servers des zweiten Zulieferers überprüft, ob zu den Inhaltsstoffen der zu validierenden Komponente entsprechende Daten in dem verteilten Repository-Netzwerk gespeichert sind.

Das Trustlet des Servers des zweiten Zulieferers erzeugt nun eine zweite Validierungs-Antwortnachricht M2' und fügt dieser Informationen zu jenen Inhaltsstoffen hinzu, die die vorbestimmten Bedingungen erfüllen. Die Inhaltsstoffe, die die vorbestimmten Bedingungen nicht erfüllen, werden der Validierungs-Antwortnachricht M2' nicht hinzugefügt, das heißt, sie bleiben geheim.

Sofern die von dem Trustlet des zweiten Zulieferers zu validierende Komponente keine Inhaltsstoffe aufweist, die von einem weiteren Zulieferer zugeliefert werden, überträgt das Trustlet die Validierungs-Antwortnachricht M2' an den Server des ersten Zulieferers.

Für den Fall, dass die von dem Trustlet des zweiten Zulieferers zu überprüfende Komponente Komponenten enthält, die von einem weiteren Zulieferer zugeliefert werden, müssen diese Komponenten von einem Trustlet der weiteren Zulieferer validiert werden, wobei hierbei die jeweilige Validierung analog zu dem von den Trustlets des ersten und des zweiten Zulieferers durchgeführten Validierungen durchgeführt wird.

Der Server des ersten Zulieferers empfängt die zweite Validierungs-Antwortnachricht M2' von dem Trustlet des zweiten Zulieferers. Die von dem Server empfangene Validierungs-Antwortnachricht M2' wird an das Trustlet des Servers übergeben. Das Trustlet des Servers des ersten Zulieferers kann nun die mit der zweiten Validierungs-Antwortnachricht M2' empfangenen Daten in die erste Validierungs-Antwortnachricht M2 einfügen.

Anschließend überträgt das Trustlet die erste Validierungs-Antwortnachricht M2 an das Clientsystem des Herstellers des Kosmetikproduktes. Der Hersteller des Kosmetikproduktes hat nun alle Informationen zu regulierten bzw. deklarierungspflichtigen Inhaltsstoffen des Kosmetikproduktes, die in den Komponenten der Zulieferer enthalten sind, sodass der Hersteller Informationen zu diesen Daten entsprechend auf der Verpackung ausweisen kann.

Das Clientsystem des Herstellers muss nun nur noch die Inhaltsstoffe validieren, die nicht in den Komponenten der Zulieferer enthalten sind. Hierzu wird auch auf dem Clientsystem ein Trustlet in einem vertrauenswürdigen und gesicherten Bereich des Clientsystems ausgeführt. Die Validierung dieser Inhaltsstoffe erfolgt analog zu der Validierung, die die Trustlets an den beiden Serversystemen durchführen.

Sämtliche Validierungs-Anfragenachrichten und Validierungs-Antwortnachrichten werden in dem verteilten Repository-Netzwerk gespeichert und gegebenenfalls verschlüsselt und signiert.

Abschließend werden die in dem verteilten Repository-Netzwerk gespeicherten Daten des Produktes von dem Trustlet des Clientsystems als valide gekennzeichnet.

Mit Hilfe der Trustlets, die erfindungsgemäß ausgeführt werden, kann demnach gewährleistet werden, dass vertrauenswürdige Daten auch bei der Ausführung einer Workflows in einem verteilten System vertrauenswürdig bleiben.

## Patentansprüche

1. Computer-implementiertes Verfahren zum Validieren von vertrauenswürdigen Daten in einem Computersystem, das
- ein verteiltes Repository-Netzwerk,
- ein mit dem Repository-Netzwerk operativ gekoppeltes oder operativ koppelbares erstes Clientsystem, und
- zumindest ein mit diesem Repository-Netzwerk operativ gekoppeltes oder operativ koppelbares erstes Serversystem umfasst,
wobei die vertrauenswürdigen Daten Datensätze umfassen, die in einer Speichereinrichtung des ersten Serversystems gespeichert werden, wobei
- an dem ersten Clientsystem eine erste Validierungs-Anfragenachricht erzeugt wird, die in dem Repository-Netzwerk gespeichert wird und an das erste Serversystem übertragen wird, wobei die erste Validierungs-Anfragenachricht Informationen darüber umfasst, welche Daten von dem ersten Serversystem zu validieren sind,
- das erste Serversystem die erste Validierungs-Anfragenachricht empfängt und zur Beantwortung an eine vertrauenswürdige Softwarekomponente übergibt, die in einer vertrauenswürdigen und gesicherten Umgebung des ersten Serversystems ausgeführt wird, wobei die vertrauenswürdige Softwarekomponente
- basierend auf der ersten Validierungs-Anfragenachricht eine Anzahl von Datensätzen aus der Speichereinrichtung des ersten Serversystems ausliest,
- für zumindest einen ausgelesenen Datensatz überprüft, ob dieser vorbestimmte Bedingungen erfüllt, und
- eine erste Validierungs-Antwortnachricht erzeugt, die Informationen darüber umfasst, welche der ausgelesenen Datensätze die vorbestimmte Bedingung erfüllen, und
- die erste Validierungs-Antwortnachricht in dem Repository-Netzwerk gespeichert wird und an das erste Clientsystem übertragen wird,
wobei das Computersystem ferner ein mit dem Repository-Netzwerk operativ gekoppeltes oder operativ koppelbares zweites Clientsystem umfasst, wobei nicht-vertrauenswürdige Daten von dem zweiten Clientsystem an das Repository-Netzwerk übertragen werden und in dem Repository-Netzwerk gespeichert werden,
**dadurch gekennzeichnet, dass**
das erste Clientsystem das Repository-Netzwerk überwacht und bei einer Änderung der im Repository-Netzwerk gespeicherten nicht-vertrauenswürdigen Daten die erste Validierungs-Anfragenachricht erzeugt.

2. Verfahren nach Anspruch 1, wobei die vertrauenswürdige Softwarekomponente beim Überprüfen, ob ein ausgelesener Datensatz die vorbestimmten Bedingungen erfüllt, einen Abgleich des ausgelesenen Datensatzes mit den im Repository-Netzwerk gespeicherten nicht-vertrauenswürdigen Daten durchführt, wobei ermittelt wird, ob zu dem ausgelesenen Datensatz korrespondierende Daten in dem Repository-Netzwerk gespeichert sind, wobei die vorbestimmten Bedingungen erfüllt sind, wenn zu dem ausgelesenen Datensatz korrespondierende Daten in dem Repository-Netzwerk gespeichert sind.

3. Verfahren nach Anspruch 1, wobei die erste Validierungs-Anfragenachricht und/oder die erste Validierungs-Antwortnachricht verschlüsselt in dem Repository-Netzwerk gespeichert werden.

4. Verfahren nach Anspruch 1, wobei das erste Serversystem seinerseits mit einem zweiten Serversystem gekoppelt ist oder koppelbar ist, wobei das erste Serversystem
- basierend auf der ersten Validierungs-Anfragenachricht und/oder basierend auf den ausgelesenen Datensätzen eine zweite Validierungs-Anfragenachricht erstellt, die in dem Repository-Netzwerk gespeichert wird und an das zweite Serversystem übertragen wird, und
- von dem zweiten Serversystem eine zweite Validierungs-Antwortnachricht empfängt,
wobei das erste Serversystem die empfange zweite Validierungs-Antwortnachricht als Bestandteil der ersten Validierungs-Antwortnachricht an das erste Clientsystem überträgt, und
wobei eine vertrauenswürdige Softwarekomponente, die in einer vertrauenswürdigen und gesicherten Umgebung des zweiten Serversystems ausgeführt wird,
- basierend auf der zweiten Validierungs-Anfragenachricht eine Anzahl von Datensätzen aus einer Speichereinrichtung des zweiten Serversystems ausliest,
- für zumindest einen ausgelesenen Datensatz überprüft, ob dieser vorbestimmte Bedingungen erfüllt, und
- die zweite Validierungs-Antwortnachricht erzeugt, die Informationen darüber umfasst, welche der ausgelesenen Datensätze die vorbestimmte Bedingung erfüllen.

5. Verfahren nach Anspruch 4, wobei die vertrauenswürdige Softwarekomponente beim Überprüfen, ob ein ausgelesener Datensatz die vorbestimmten Bedingungen erfüllt, einen Abgleich des ausgelesenen Datensatzes mit in dem Repository-Netzwerk gespeicherten nicht-vertrauenswürdigen Daten durchführt, wobei ermittelt wird, ob zu dem ausgelesenen Datensatz korrespondierende Daten in dem Repository-Netzwerk gespeichert sind, wobei die vorbestimmten Bedingungen erfüllt sind, wenn zu dem ausgelesenen Datensatz korrespondierende Daten in dem Repository-Netzwerk gespeichert sind.

6. Verfahren nach Anspruch 4, wobei die zweite Validierungs-Anfragenachricht und/oder die zweite Validierungs-Antwortnachricht verschlüsselt in dem Repository-Netzwerk gespeichert werden.

7. Verfahren nach Anspruch 1, wobei das erste Serversystem die vertrauenswürdige Softwarekomponente digital signiert und wobei die digitale Signatur in dem Repository-Netzwerk gespeichert wird.

8. Verfahren nach Anspruch 4, wobei das zweite Serversystem die vertrauenswürdige Softwarekomponente digital signiert und wobei die digitale Signatur in dem Repository-Netzwerk gespeichert wird.

9. Verfahren nach Anspruch 1, wobei die erste Validierungs-Antwortnachricht von dem ersten Serversystem digital signiert wird und wobei in dem Repository-Netzwerk die Signatur der ersten Validierungs-Antwortnachricht mit einem öffentlichen Schlüssel des ersten Serversystems, der in dem in dem Repository-Netzwerk gespeichert wird, validiert wird, wobei bei einer positiven Validierung die Validierungs-Antwortnachricht an das erste Clientsystem übertragen wird.

10. Verfahren nach Anspruch 4, wobei die zweite Validierungs-Antwortnachricht von dem zweiten Serversystem digital signiert wird und wobei in dem Repository-Netzwerk die Signatur der zweiten Validierungs-Antwortnachricht mit einem öffentlichen Schlüssel des zweiten Serversystems, der in dem in dem Repository-Netzwerk gespeichert wird, validiert wird, wobei bei einer positiven Validierung die zweite Validierungs-Antwortnachricht an das erste Serversystem übertragen wird.

11. Verfahren nach Anspruch 1 oder 4, wobei das Überprüfen, ob ein ausgelesener Datensatz die vorbestimmten Bedingungen erfüllt, anhand einer vorbestimmten Validierungslogik durchgeführt wird, wobei Informationen zu der vorbestimmten Validierungslogik in dem Repository-Netzwerk gespeichert werden.

12. Verfahren nach Anspruch 1, wobei das verteilte Repository-Netzwerk ein Blockchain-Netzwerk ist.

## Claims

1. Computer-implemented method for validating trusted data in a computer system that comprises
- a distributed repository network,
- a first client system which is or can be operatively coupled to the repository network, and
- at least one first server system which is or can be operatively coupled to this repository network,
wherein the trusted data comprise data records stored in a memory device of the first server system, wherein
- a first validation request message is generated at the first client system and is stored in the repository network and transmitted to the first server system, wherein the first validation request message comprises information about which data are to be validated by the first server system,
- the first server system receives the first validation request message and transfers it to a trusted software component for responding, which component is executed in a trusted and secure environment of the first server system, wherein the trusted software component
- reads out a number of data records from the memory device of the first server system based on the first validation request message,
- for at least one read-out data record, checks whether it meets predetermined conditions, and
- generates a first validation response message comprising information about which of the read-out data records meet the predetermined condition, and
- the first validation response message is stored in the repository network and transmitted to the first client system,
wherein the computer system further comprises a second client system which is or can be operatively coupled to the repository network, wherein non-trusted data are transmitted from the second client system to the repository network and stored in the repository network,
**characterized in that**
the first client system monitors the repository network and generates the first validation request message when there is a change to the non-trusted data stored in the repository network.

2. Method according to claim 1, wherein, when checking whether a read-out data record meets the predetermined conditions, the trusted software component performs a comparison of the read-out data record with the non-trusted data stored in the repository network, wherein it is determined whether data corresponding to the read-out data record are stored in the repository network, wherein the predetermined conditions are met when data corresponding to the read-out data record are stored in the repository network.

3. Method according to claim 1, wherein the first validation request message and/or the first validation response message are stored in encrypted form in the repository network.

4. Method according to claim 1, wherein the first server system in turn is or can be coupled to a second server system, wherein the first server system
- based on the first validation request message and/or based on the read-out data records, generates a second validation request message which is stored in the repository network and transmitted to the second server system, and
- receives a second validation response message from the second server system,
wherein the first server system transmits the received second validation response message as a component of the first validation response message to the first client system, and
wherein a trusted software component which is executed in a trusted and secure environment of the second server system
- reads out a number of data records from a memory device of the second server system based on the second validation request message,
- for at least one read-out data record, checks whether it meets predetermined conditions, and
- generates the second validation response message comprising information about which of the read-out data records meet the predetermined condition.

5. Method according to claim 4, wherein, when checking whether a read-out data record meets the predetermined conditions, the trusted software component performs a comparison of the read-out data record with non-trusted data stored in the repository network, wherein it is determined whether data corresponding to the read-out data record are stored in the repository network, wherein the predetermined conditions are met when data corresponding to the read-out data record are stored in the repository network.

6. Method according to claim 4, wherein the second validation request message and/or the second validation response message are stored in encrypted form in the repository network.

7. Method according to claim 1, wherein the first server system digitally signs the trusted software component and wherein the digital signature is stored in the repository network.

8. Method according to claim 4, wherein the second server system digitally signs the trusted software component and wherein the digital signature is stored in the repository network.

9. Method according to claim 1, wherein the first validation response message is digitally signed by the first server system, and wherein, in the repository network, the signature of the first validation response message is validated with a public key of the first server system which is stored in the repository network, wherein in the case of positive validation the validation response message is transmitted to the first client system.

10. Method according to claim 4, wherein the second validation response message is digitally signed by the second server system, and wherein, in the repository network, the signature of the second validation response message is validated with a public key of the second server system which is stored in the repository network, wherein in the case of positive validation the second validation response message is transmitted to the first server system.

11. Method according to claim 1 or 4, wherein the check as to whether a read-out data record meets the predetermined conditions is carried out on the basis of a predetermined validation logic, wherein information about the predetermined validation logic is stored in the repository network.

12. Method according to claim 1, wherein the distributed repository network is a blockchain network.

## Revendications

1. Procédé mis en oeuvre par ordinateur pour la validation de données fiables dans un système informatique, qui comprend
- un réseau de dépôt distribué,
- un premier système client couplé de manière opérationnelle ou pouvant être couplé de manière opérationnelle au réseau de dépôt, et
- au moins un premier système serveur couplé de manière opérationnelle ou pouvant être couplé de manière opérationnelle audit réseau de dépôt,
dans lequel les données fiables comprennent des jeux de données qui sont mémorisés dans un dispositif de mémoire du premier système serveur, dans lequel
- un premier message de requête de validation est généré sur le premier système client, lequel message est mémorisé dans le réseau de dépôt et transmis au premier système serveur, dans lequel le premier message de requête de validation comprend des informations concernant des données qui doivent être validées par le premier système serveur,
- le premier système serveur reçoit le premier message de requête de validation et le remet à un composant logiciel fiable pour y répondre, lequel composant logiciel est exécuté dans un environnement fiable et sécurisé du premier système serveur, dans lequel le composant logiciel fiable
- lit, sur la base du premier message de requête de validation, un certain nombre de jeux de données depuis le dispositif de mémoire du premier système serveur,
- vérifie, pour au moins un jeu de données lu, si celui-ci remplit des conditions prédéterminées, et
- génère un premier message de réponse de validation qui comprend des informations concernant les jeux de données lus qui remplissent la condition prédéterminée, et
- le premier message de réponse de validation est mémorisé dans le réseau de dépôt et est transmis au premier système client,
dans lequel le système informatique comprend en outre un second système client couplé de manière opérationnelle ou pouvant être couplé de manière opérationnelle au réseau de dépôt, dans lequel des données non fiables provenant du second système client sont transmises au réseau de dépôt et sont mémorisées dans le réseau de dépôt,
**caractérisé en ce que**
le premier système client surveille le réseau de dépôt et, lors d'une modification des données non fiables mémorisées dans le réseau de dépôt, génère le premier message de requête de validation.

2. Procédé selon la revendication 1, dans lequel le composant logiciel fiable, lors de la vérification du fait de savoir si un jeu de données lu remplit les conditions prédéterminées, réalise une comparaison du jeu de données lu avec les données non fiables mémorisées dans le réseau de dépôt, dans lequel il est déterminé si des données correspondant au jeu de données lu sont mémorisées dans le réseau de dépôt, dans lequel les conditions prédéterminées sont remplies lorsque des données correspondant au jeu de données lu sont mémorisées dans le réseau de dépôt.

3. Procédé selon la revendication 1, dans lequel le premier message de requête de validation et/ou le premier message de réponse de validation sont mémorisés de manière chiffrée dans le réseau de dépôt.

4. Procédé selon la revendication 1, dans lequel le premier système serveur est couplé ou peut être couplé de son côté à un second système serveur, dans lequel le premier système serveur
- produit, sur la base du premier message de requête de validation et/ou sur la base des jeux de données lus, un second message de requête de validation qui est mémorisé dans le réseau de dépôt et est transmis au second système serveur, et
- reçoit en provenance du second système serveur un second message de réponse de validation,
dans lequel le premier système serveur transmet le second message de réponse de validation reçu sous forme de partie du premier message de réponse de validation au premier système client, et
dans lequel un composant logiciel fiable, lequel est exécuté dans un environnement fiable et sécurisé du second système serveur,
- lit, sur la base du second message de requête de validation, un certain nombre de jeux de données depuis un dispositif de mémoire du second système serveur,
- vérifie, pour au moins un jeu de données lu, si celui-ci remplit des conditions prédéterminées, et
- génère le second message de réponse de validation, lequel comprend des informations concernant les jeux de données lus qui remplissent la condition prédéterminée.

5. Procédé selon la revendication 4, dans lequel le composant logiciel fiable, lors de la vérification du fait de savoir si un jeu de données lu remplit les conditions prédéterminées, réalise une comparaison du jeu de données lu avec des données non fiables mémorisées dans le réseau de dépôt, dans lequel il est déterminé si des données correspondant au jeu de données lu sont mémorisées dans le réseau de dépôt, dans lequel les conditions prédéterminées sont remplies lorsque des données correspondant au jeu de données lu sont mémorisées dans le réseau de dépôt.

6. Procédé selon la revendication 4, dans lequel le second message de requête de validation et/ou le second message de réponse de validation sont mémorisés de manière chiffrée dans le réseau de dépôt.

7. Procédé selon la revendication 1, dans lequel le premier système serveur signe de manière numérique le composant logiciel fiable et dans lequel la signature numérique est mémorisée dans le réseau de dépôt.

8. Procédé selon la revendication 4, dans lequel le second système serveur signe de manière numérique le composant logiciel fiable et dans lequel la signature numérique est mémorisée dans le réseau de dépôt.

9. Procédé selon la revendication 1, dans lequel le premier message de réponse de validation est signé de manière numérique par le premier système serveur et dans lequel, dans le réseau de dépôt, la signature du premier message de réponse de validation est validée avec une clé publique du premier système serveur qui est mémorisée dans le dans le réseau de dépôt, dans lequel, lors d'une validation positive, le message de réponse de validation est transmis au premier système client.

10. Procédé selon la revendication 4, dans lequel le second message de réponse de validation est signé de manière numérique par le second système serveur et dans lequel, dans le réseau de dépôt, la signature du second message de réponse de validation est validée avec une clé publique du second système serveur qui est mémorisée dans le dans le réseau de dépôt, dans lequel, lors d'une validation positive, le second message de réponse de validation est transmis au premier système serveur.

11. Procédé selon la revendication 1 ou 4, dans lequel la vérification du fait de savoir si un jeu de données lu remplit les conditions prédéterminées est réalisée à l'aide d'une logique de validation prédéterminée, dans lequel des informations concernant la logique de validation prédéterminée sont mémorisées dans le réseau de dépôt.

12. Procédé selon la revendication 1, dans lequel le réseau de dépôt distribué est un réseau de chaîne de blocs.
